(19) Europäisches Patentamt
European Patent Office
Office européen des brevets

(11) **EP 4 354 550 A1**

(12) **EUROPEAN PATENT APPLICATION**
published in accordance with Art. 153(4) EPC

(43) Date of publication:
**17.04.2024 Bulletin 2024/16**

(21) Application number: **22816105.5**

(22) Date of filing: **31.05.2022**

(51) International Patent Classification (IPC):
*H01M 4/62* (2006.01)    *C01B 32/05* (2017.01)
*H01G 11/42* (2013.01)    *H01G 11/44* (2013.01)
*H01G 11/86* (2013.01)    *H01M 4/13* (2010.01)

(52) Cooperative Patent Classification (CPC):
**C01B 32/05; H01G 11/42; H01G 11/44;
H01G 11/86; H01M 4/13; H01M 4/62;** Y02E 60/10

(86) International application number:
**PCT/JP2022/022127**

(87) International publication number:
**WO 2022/255359 (08.12.2022 Gazette 2022/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.06.2021 JP 2021092329**

(71) Applicant: **Kuraray Co., Ltd.**
**Kurashiki-shi, Okayama 710-0801 (JP)**

(72) Inventors:
• **KOBAYASHI, Shohei**
**Kurashiki-shi, Okayama 710-0801 (JP)**
• **KAWAKAMI, Tomohiro**
**Kurashiki-shi, Okayama 710-0801 (JP)**
• **SAITO, Tsutomu**
**Kurashiki-shi, Okayama 710-0801 (JP)**
• **TAKAI, Jun**
**Kurashiki-shi, Okayama 710-0801 (JP)**

(74) Representative: **Müller-Boré & Partner**
**Patentanwälte PartG mbB**
**Friedenheimer Brücke 21**
**80639 München (DE)**

(54) **POROUS CARBON FOR POSITIVE ELECTRODE ADDITIVE FOR NON-AQUEOUS ELECTROLYTE SECONDARY BATTERY, POSITIVE ELECTRODE ADDITIVE FOR NON-AQUEOUS ELECTROLYTE SECONDARY BATTERY, NON-AQUEOUS ELECTROLYTE SECONDARY BATTERY, AND PRODUCTION METHOD FOR POROUS CARBON**

(57)    The purpose is to provide porous carbon suitable for a positive electrode additive that can improve the input/output characteristics of a non-aqueous electrolyte secondary battery at room temperature and ensure the peel strength of an electrode. The present invention relates to porous carbon having a pore volume of pores with 2 nm or more and 200 nm or less of 0.8 cm$^3$/g or more as measured by the BJH method, a bulk density of 0.10 g/cm$^3$ or less, a mode pore diameter of 150 nm or less as measured by the BJH method, and an average primary particle diameter of 1 μm or more and 100 μm or less.

FIG. 1

**Description**

Technical Field

The present patent application claims priority under the Paris Convention to Japanese Patent Application No. 2021-092329 (filing date: June 1, 2021), which is hereby incorporated herein by reference in its entirety.

The present invention relates to porous carbon suitable for an additive for a positive electrode for a non-aqueous electrolyte secondary battery, an additive for a positive electrode comprising the porous carbon material, a positive electrode for a non-aqueous electrolyte secondary battery comprising the additive for a positive electrode, a non-aqueous electrolyte secondary battery having the positive electrode and a method for producing the porous carbon.

Background Art

Demand for non-aqueous electrolyte secondary batteries, such as lithium ion secondary batteries, which are small, lightweight, have a high energy density, and are repeatedly chargeable and dischargeable, is rapidly increasing utilizing their characteristics. Lithium ion secondary batteries are used in mobile phones, notebook-type personal computers, electric vehicles, and the like because of their relatively high energy density. With expanding and developing of the applications of these lithium-ion batteries, there is a need for improvement in output characteristics.

A method of adding activated carbon to the positive electrode has been proposed as a method for improving the output characteristics of lithium ion secondary batteries.

For example, it is reported in Patent Document 1 that adding activated carbon having a pore volume of pores having a diameter of 20 Å or more of 0.418 cc/g or more, and a specific surface area of 1200 m$^2$/g or more to a positive electrode improves the output characteristics at -30°C .

Ketjen black is known as porous carbon having a large pore volume of pores having a pore diameter of 2 nm or more and large voids having a diameter of 200 nm or more, i.e., low bulk density, and is used as an additive for a positive electrode (Patent Document 2).

Prior Art Documents:

Patent Documents:

Patent Document 1: JP 4964404 B
Patent Document 2: JP 4727386 B

Summary of Invention

Problems to be solved by the invention:

However, according to the present inventors' study, no sufficient improvement in the input/output characteristics at room temperature was sometimes shown, even if the activated carbon shown in Patent Document 1 above was added to the positive electrode.

In addition, when Ketjen black described in Patent Document 2 was added to a positive electrode, not only was there little improvement in the input/output characteristics, but the dispersibility of a slurry for the positive electrode was easily impaired by adsorption of a binder to Ketjen black, and agglomeration of conductive agents, so that it was sometimes difficult to ensure the peel strength of the resulting electrode.

The present invention was made in view of the above actual circumstances, and aims at providing porous carbon suitable for an additive for a positive electrode that can improve the input/output characteristics of a non-aqueous electrolyte secondary battery at room temperature and ensure the peel strength of an electrode.

Means for solving the problem:

As a result of the detailed study to solve the above problems, the inventors found that the above problems can be solved by adding porous carbon having specific physical properties to the positive electrode, thus leading to the present invention.

That is, the present invention encompasses the following suitable aspects.

[1] Porous carbon having a pore volume of pores with 2 nm or more and 200 nm or less of 0.8 $cm^3/g$ or more as measured by the BJH method, a bulk density of 0.10 $g/cm^3$ or less, a mode pore diameter of 150 nm or less as measured by the BJH method, and an average primary particle diameter of 1 um or more and 100 $\mu$m or less.

[2] The porous carbon according to [1], having a pore volume of pores with less than 2 nm of 0.35 $cm^3/g$ or less as measured by the DFT method.

[3] The porous carbon according to [1] or [2], having a specific surface area of 500 $m^2/g$ or more and 1200 $m^2/g$ or less as measured by the BET method.

[4] The porous carbon according to any one of [1] to [3], wherein the calcium content is 20 ppm or more and 2000 ppm or less.

[5] The porous carbon according to any one of [1] to [4], wherein the sulfur content is 1000 ppm or less, and the silicon content is 1000 ppm or less.

[6] The porous carbon according to any one of [1] to [5], having a bulk density of 0.05 $g/cm^3$ or less.

[7] A method for producing the porous carbon according to any one of [1] to [6], comprising:

(1) a step of obtaining a mixture comprising a carbon source and a calcium compound;
(2) a step of heat-treating the mixture in an inert gas atmosphere to obtain a carbide; and
(3) a step of removing the calcium compound from the carbide.

[8] The method according to [7], wherein the mixture in the step (1) further comprises at least one selected from the group consisting of a polyhydric alcohol and a carboxylic acid.

[9] The method according to [7] or [8], wherein the calcium compound has a melting point of 300°C or less.

[10] The method according to any one of [7] to [9], wherein the calcium compound is at least one selected from the group consisting of a calcium chloride hydrate, calcium hydroxide, calcium oxide, calcium carbonate and calcium acetate.

[11] The method according to any one of [7] to [10], wherein the carbon source is a saccharide.

[12] The method according to [11], wherein the saccharide is at least one selected from the group consisting of a monosaccharide, a disaccharide and a polysaccharide.

[13] The method according to any one of [7] to [12], wherein the removal of the calcium compound in the step (3) is performed by acid washing.

[14] The method according to any one of [7] to [13], wherein the temperature of the heat treatment step in the step (2) is 400°C or more and 1300°C or less.

[15] The method according to any one of [7] to [14], wherein the temperature increase rate of the heat treatment step in the step (2) is 2°C/min or more.

[16] The porous carbon according to any one of [1] to [6], which is a positive electrode additive for a non-aqueous electrolyte secondary battery.

[17] The porous carbon according to any one of [1] to [6], which is a positive electrode additive for a lithium ion secondary battery.

[18] A composition for a non-aqueous electrolyte secondary battery positive electrode comprising the porous carbon according to any one of [1] to [6].

[19] A composition for a lithium ion secondary battery positive electrode comprising the porous carbon according to any one of [1] to [6].

[20] A non-aqueous electrolyte secondary battery comprising a positive electrode comprising the composition for a non-aqueous electrolyte secondary battery positive electrode according to [18].

[21] A lithium ion secondary battery comprising a positive electrode comprising the composition for a lithium ion secondary battery positive electrode according to [19].

Effect of the Invention

According to the present invention, porous carbon suitable for an additive for a positive electrode that can improve the input/output characteristics of a non-aqueous electrolyte secondary battery at room temperature and ensure the peel strength of an electrode can be provided.

Brief Description of Drawings

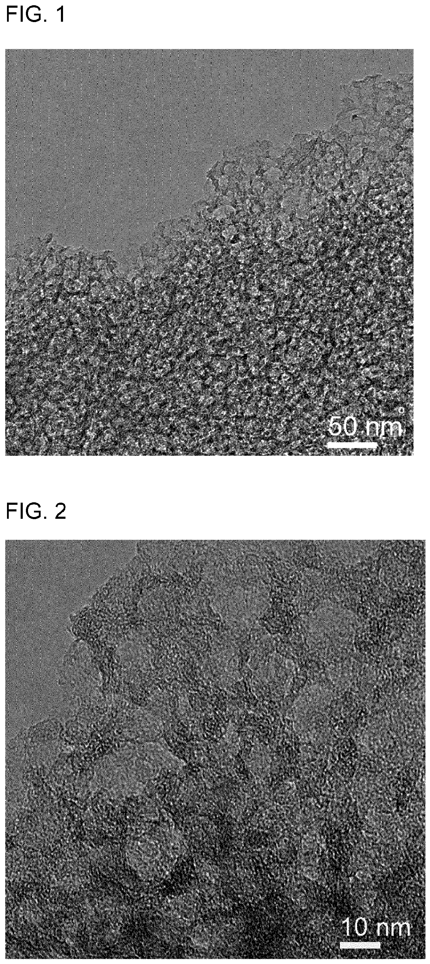

Fig. 1 is a transmission electron microscope (TEM) observation photograph of porous carbon of Example 6.
Fig. 2 is a transmission electron microscope (TEM) observation photograph of the porous carbon of Example 6.

Fig. 3 is a scanning electron microscope (SEM) observation photograph of porous carbon of Example 8.

Fig. 4 is a scanning electron microscope (SEM) observation photograph of the porous carbon of Example 8.

Fig. 5 is a transmission electron microscope (TEM) observation photograph of porous carbon of Comparative Example 9.

Fig. 6 is a transmission electron microscope (TEM) observation photograph of the porous carbon of Comparative Example 9.

Fig. 7 is a scanning electron microscope (SEM) observation photograph of the porous carbon of Comparative Example 9.

Fig. 8 is a scanning electron microscope (SEM) observation photograph of the porous carbon of Comparative Example 9.

Fig. 9 is a scanning electron microscope (SEM) observation photograph of the porous carbon of Comparative Example 13.

Fig. 10 is a scanning electron microscope (SEM) observation photograph of the porous carbon of Comparative Example 13.

Description of Embodiments

Embodiments of the present invention will hereinafter be described in detail. The following is an illustrative description of embodiments of the present invention and is not intended to limit the present invention to the following embodiments.

<Porous Carbon>

The porous carbon of the present invention has a pore volume of pores with 2 nm or more and 200 nm or less of 0.8 $cm^3$/g or more as measured by the BJH method, a bulk density of 0.10 g/$cm^3$ or less, a mode pore diameter of 150 nm or less as measured by the BJH method, and an average primary particle diameter of 1 um or more to 100 um or less.

In the porous carbon of the present invention, the pore volume of pores with 2 nm or more and 200 nm or less is 0.8 $cm^3$/g or more as measured by the BJH method. When the pore volume of pores with 2 nm or more and 200 nm or less is 0.8 $cm^3$/g or more, lithium ion storage into the pores and lithium ion mobility to the vicinity of a positive electrode active material are excellent, and lithium ions can be supplied abundantly around the positive electrode active material. This can facilitate smooth insertion and desorption of lithium ions into and from the positive electrode active material, thereby improving the input/output characteristics. If the pore volume of pores with 2 nm or more and 200 nm or less is less than 0.8 $cm^3$/g, the mobility of lithium ions tends to decrease, and the mobility of the electrolyte tends to further decrease due pore blockage caused by gas generated when the electrolytic solution decomposes in an electrochemical device. Therefore, the pore volume of pores with 2 nm or more and 200 nm or less is preferably 0.9 $cm^3$/g or more, more preferably 1.00 $cm^3$/g or more, even more preferably 1.30 $cm^3$/g or more, still even more preferably 1.60 $cm^3$/g or more, particularly preferably 1.65 $cm^3$/g or more, particularly preferably 1.90 $cm^3$/g or more, extremely preferably 2.30 $cm^3$/g or more, and particularly extremely preferably 3.20 $cm^3$/g or more. When the pore volume of pores with 2 nm or more and 200 nm or less is the above lower limit or more, the input/output characteristics tend to be more improved. When the pore volume of pores with 2 nm or more and 200 nm pore or less increases, electrolyte retention capacity becomes excellent and electrolyte mobility also tends to become excellent. Therefore, the upper limit is not particularly limited, but is preferably 4.00 $cm^3$/g or less, and more preferably 3.90 $cm^3$/g or less. The pore volume of pores with 2 nm or more and 200 nm or less can be adjusted within the above range by adjusting as appropriate, for example, the type and/or amount of carbon source and calcium compound; the temperature and/or time of the heat treatment step, and the like in a method for producing porous carbon described below. The pore volume of pores with 2 nm or more and 200 nm or less can be measured by pore distribution analysis by the BJH method in nitrogen adsorption measurement, for example, by the method described in examples below.

In the porous carbon of the present invention, the bulk density is 0.10 g/$cm^3$ or less. The bulk density in porous carbon indicates the degree of development of the pore structure. If the pore volumes of pores with 200 nm or less are equivalent, the one having a lower bulk density will have a larger volume of voids with 200 nm or more. The pores with 2 nm or more and 200 nm or less are considered to be responsible for the function of storage and movement of lithium ions, whereas the voids with 200 nm or more are considered to be responsible for the function of retaining the electrolytic solution and supplying lithium ions to the pores with 2 nm or more and 200 nm or less. Therefore, in addition to the pores with 2 nm or more and 200 nm or less, a large volume of voids with 200 nm or more, i.e., a small bulk density, is preferred in the present invention. If the bulk density exceeds 0.10 g/$cm^3$, the retention of the electrolytic solution may not be sufficient, resulting in the reduced input/output characteristics. The bulk density is preferably 0.07 g/$cm^3$ or less, and more preferably 0.06 g/$cm^3$ or less; in an embodiment of the present invention, the bulk density is even more preferably

0.05 g/cm$^3$ or less, still even more preferably 0.015 g/cm$^3$ or less, particularly preferably 0.014 g/cm$^3$ or less, more particularly preferably 0.013 g/cm$^3$ or less, even more particularly preferably 0.012 g/cm$^3$ or less, extremely preferably 0.011 g/cm$^3$ or less, more extremely preferably 0.010 g/cm$^3$ or less, even more extremely preferably 0.009 g/cm$^3$ or less, and still even more extremely preferably 0.008 g/cm$^3$ or less. When the bulk density is the above upper limit or less, the electrolytic solution can be abundantly retained within the voids with 200 nm or more, and the input/output characteristics are more easily improved. The bulk density is usually preferably 0.003 g/cm$^3$ or more from the viewpoint of facilitating the maintenance of the peel strength of an electrode, since it may be difficult to retain the strength of the carbon skeleton if the bulk density is too low. The bulk density can be adjusted within the above range by adjusting as appropriate, for example, the type and/or amount of carbon source and calcium compound; the temperature and/or time of the heat treatment step, and the like in the method for producing porous carbon described below. The bulk density can be measured by the method described in examples below.

In the porous carbon of the present invention, the mode pore diameter as measured by the BJH method is 150 nm or less. Here, the "mode diameter" means a pore diameter with the highest appearance ratio in the logarithmic differential pore volume distribution (dV/d (log D)), in which the cumulative pore volume (V) is differentiated with respect to the common logarithm of the pore diameter (D). When the mode diameter of porous carbon is 150 nm or less, lithium ion storage into the pores and movement of lithium ions to the vicinity of the positive electrode active material can proceed smoothly, and lithium ions can be abundantly supplied around the positive electrode active material. This makes it easier to improve the input/output characteristics. Also, adsorption of a binder into pores of porous carbon can be suppressed during slurry preparation, which improves the peel strength of an electrode, and chipping of the electrode tends to be suppressed. If the mode diameter exceeds 150 nm, the amount of lithium ions stored in the pores decreases and the supply of lithium ions to the active material surface is reduced. In addition, the binder easily adsorbs into the pores of porous carbon during slurry preparation. The mode diameter is preferably 145 nm or less, more preferably 100 nm or less, even more preferably 55 nm or less, still even more preferably 50 nm or less, particularly preferably 30 nm or less, more particularly preferably 25 nm or less, even more particularly preferably 20 nm or less, extremely preferably 15 nm or less, and more extremely preferably 13 nm or less. When the mode diameter is the above upper limit or less, the input/output characteristics are more easily improved. The lower limit of the mode diameter is not limited, but if the mode diameter is too small, the mobility of lithium ions tends to decrease, and the mobility of the electrolyte tends to further decrease due to pore blockage caused by gas generated when the electrolytic solution decomposes in the electrochemical device. Therefore, it is usually 2 nm or more, and more preferably 9 nm or more. The mode diameter can be adjusted within the above range by adjusting as appropriate, for example, the type and/or amount of carbon source and calcium compound; the temperature and/or time of the heat treatment step, and the like in the method for producing porous carbon described below. The mode diameter can be measured by pore distribution analysis by the BJH method in nitrogen adsorption measurement, for example, by the method described in examples below.

In the porous carbon of the present invention, the average primary particle diameter is 1 um or more and 100 μm or less. By the average primary particle diameter of 1 μm or more and 100 μm or less, the storage and diffusion of lithium ions are likely to occur moderately, resulting in good input/output characteristics. In addition, since agglomeration of porous carbons is less likely to occur, uneven coating after electrode coating hardly occurs, and the peel strength of an electrode can be increased. When the average primary particle diameter is less than 1 μm, due to containing fine powder, it cannot be suppressed with the binder or the like, and is likely to be released from within the electrode. In addition, agglomeration of fine powders within the electrode tends to occur. This causes uneven coating after electrode coating and reduces the peel strength of the electrode. When the average primary particle diameter exceeds 100 μm, it is difficult to form good ion diffusion paths among active materials, and the input/output characteristics are hardly improved. In addition, coarse particles are likely to cause unevenness in the electrode, which reduces the peel strength of the electrode. In view of the above, the average primary particle diameter is preferably 2 μm or more, more preferably 5 μm or more, preferably 80 μm or less, and more preferably 60 μm or less. When the average primary particle diameter is within the above range, the input/output characteristics of the non-aqueous electrolyte secondary battery at room temperature can be more improved and the peel strength of the electrode is more easily enhanced. The average primary particle diameter can be adjusted within the above range by adjusting as appropriate, for example, the type of carbon source; the conditions for the pulverization step, and the like in the method for producing porous carbon described below. In the present invention, the average primary particle diameter is the diameter of particles whose cumulative volume is 50% as measured by the laser diffraction and scattering method, and this value is used as the average primary particle diameter. In cases where the measurement by the laser diffraction and scattering method is impossible, it may refer to the average particle diameter obtained by measuring the particle diameter of primary particles as projected on an electron microscope image and calculating their average value.

In the porous carbon of the present invention, the pore volume of pores with less than 2 nm as measured by the DFT method is preferably 0.35 cm$^3$/g or less, more preferably 0.30 cm$^3$/g or less, even more preferably 0.20 cm$^3$/g or less, still even more preferably 0.15 cm$^3$/g or less, particularly preferably 0.13 cm$^3$/g or less, more particularly preferably 0.12 cm$^3$/g or less, even more particularly preferably 0.10 cm$^3$/g or less, still even more particularly preferably 0.09 cm$^3$/g

or less, and extremely preferably 0.08 cm$^3$/g or less. If the pore volume of pores with less than 2 nm is the above upper limit or less, adsorption of lithium ions into pores with less than 2 nm is less likely to occur, thus lithium ions can be supplied to the active material, and the input/output characteristics are easily improved. The lower limit value of the pore volume of pores with less than 2 nm is not particularly limited, but is preferably 0.01 cm$^3$/g or more. The pore volume of pores with less than 2 nm volume can be adjusted within the above range by adjusting as appropriate, for example, the type and/or amount of carbon source and calcium compound; the temperature and/or time of the heat treatment step, and the like in the method for producing porous carbon described below. The pore volume of pores with less than 2 nm can be measured by pore distribution analysis by the DFT method in nitrogen adsorption measurement, for example, by the method described in examples below.

In the porous carbon of the present invention, the pore volume of pores with 2 nm or more and 10 nm or less as measured by the DH method is preferably 0.55 cm$^3$/g or less, more preferably 0.53 cm$^3$/g or less, even more preferably 0.45 cm$^3$/g or less, still even more preferably 0.40 cm$^3$/g or less, particularly preferably 0.35 cm$^3$/g or less, more particularly preferably 0.30 cm$^3$/g or less, even more particularly preferably 0.25 cm$^3$/g or less, and extremely preferably 0.20 cm$^3$/g or less. If the pore volume of pores with 2 nm or more and 10 nm pore volume or less is 0.55 cm$^3$/g or less, the mobility of lithium ions to the vicinity of the positive electrode active material is easily improved, and, since the blockage of pores due to gas generated when the electrolytic solution decomposes in the electrochemical device is less likely to occur, lithium ions can be easily and abundantly supplied around the positive electrode active material. This can facilitate smooth insertion and desorption of lithium ions into and from the positive electrode active material, and the input/output characteristics tend to be improved. When the pore volume of pores with 2 nm or more and 10 nm or less is reduced, the electrolyte mobility also tends to be excellent and therefore, the lower limit is not particularly limited, but is preferably 0.01 cm$^3$/g or more, more preferably 0.05 cm$^3$/g or more, even more preferably 0.10 cm$^3$/g or more. The pore volume of pores with 2 nm and more and 10 nm or less can be adjusted within the above range by adjusting as appropriate, for example, the type and/or amount of carbon source and calcium compound; the temperature and/or time of the heat treatment step, and the like in the method for producing porous carbon described below. The pore volume of pores with 2 nm or more and 10 nm or less can be measured by pore distribution analysis by the DH method in nitrogen adsorption measurement, for example, by the method described in examples below.

In the porous carbon of the present invention, the specific surface area measured by the BET method is preferably 500 m$^2$/g or more, more preferably 600 m$^2$/g or more, even more preferably 650 m$^2$/g or more, still even more preferably 700 m$^2$/g or more, preferably 1200 m$^2$/g or less, more preferably 1000 m$^2$/g or less, and even more preferably 900 m$^2$/g or less. When the specific surface area is within the above range, lithium ions in the electrolytic solution are easily retained sufficiently, and the input/output characteristics are easily improved. In addition, lithium ions easily diffuse and the coating stability is also easily improved. The specific surface area can be adjusted within the above range by adjusting as appropriate, for example, the type and/or amount of carbon source and calcium compound; the temperature and/or time of the heat treatment step, and the like in the method for producing porous carbon described below. The surface specific area can be measured, for example, by the method described in examples below.

In the porous carbon of the present invention, the calcium content is preferably 20 ppm or more, more preferably 50 ppm or more, even more preferably 100 ppm or more, preferably 2000 ppm or less, more preferably 1500 ppm or less, and even more preferably 1000 ppm or less. When the calcium content is within the above range, an excessive increase in the mass of the porous carbon is easily controlled, and the productivity also tends to be excellent. The calcium content can be adjusted within the above range, for example, by adjusting as appropriate the conditions for the step of removing a calcium compound (e.g., type and/or concentration of acid used for acid washing, time and temperature of acid and/or water washing, and the like) in the method for producing porous carbon described below.

In the porous carbon of the present invention, the sulfur content is preferably 1000 ppm or less, more preferably 900 ppm or less, and even more preferably 800 ppm or less. The silicon content is preferably 1000 ppm or less, more preferably 900 ppm or less, and even more preferably 800 ppm or less. When the sulfur and silicon contents are within the above ranges, side reactions in the positive electrode are suppressed, and the input/output characteristics are easily improved. The lower limits of sulfur and silicon contents are not particularly limited and may be 0 ppm. The sulfur and silicon contents can be adjusted within the above ranges, for example, by the type of carbon source; the conditions for the step of removing a calcium compound (e.g., type and/or concentration of acid used for acid washing, time and temperature of acid and/or water washing, and the like) in the method for producing porous carbon described below. The calcium, sulfur and silicon contents can be measured by fluorescent X-ray analysis, for example, by the method described in examples below.

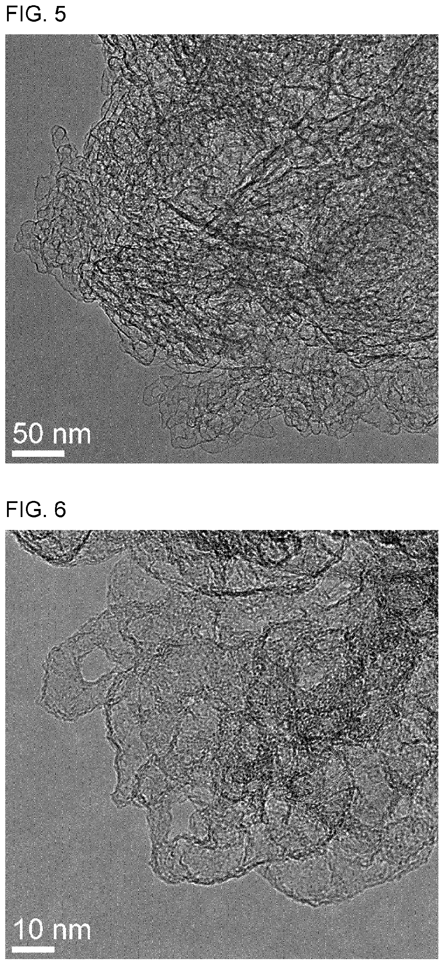

In general porous carbon, mesopores form a three-dimensional network structure, and may be a structure in which the mesopores may be interconnected. In such three-dimensional network structures, there are usually pore dead ends (blockages). However, in an embodiment of the porous carbon of the present invention, it was found by the present inventors that all the pores are continuously connected three dimensionally and can have a continuous pore structure with no pore dead ends (see Figs. 5 and 6). In an embodiment of the porous carbon of the present invention, it was found to be porous carbon suitable for a positive electrode additive that can improve the input/output characteristics of a non-aqueous electrolyte secondary battery at room temperature and can also ensure the peel strength of an electrode because the diffusion rate of lithium ions in the pores is increased by having the above continuous pore structure. It was also found that such a continuous pore structure can be achieved by applying a production method described below.

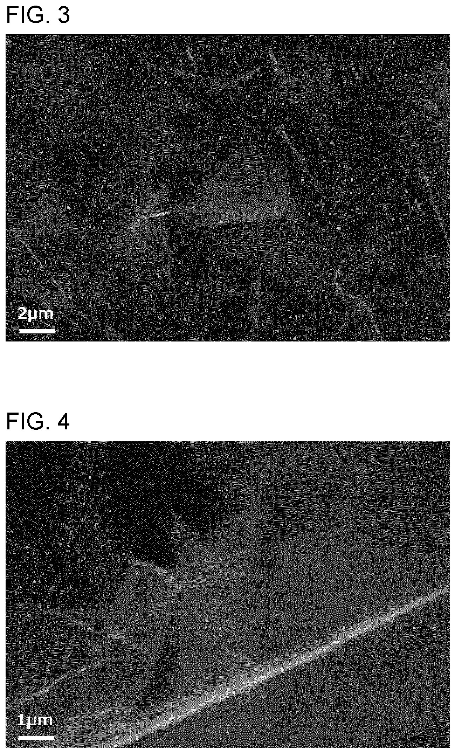

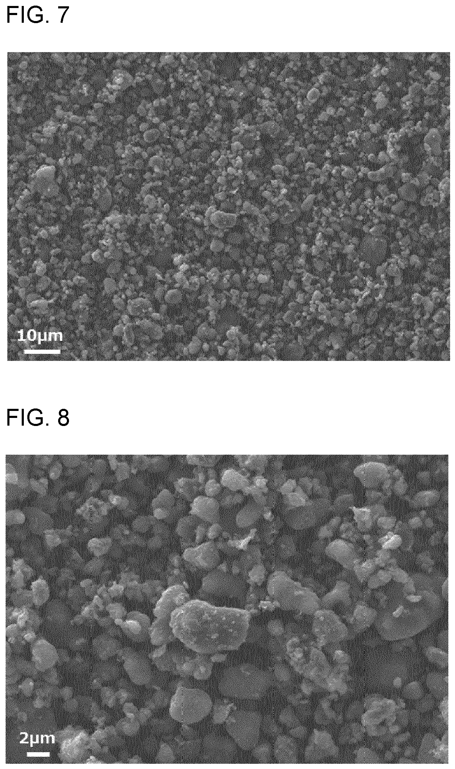

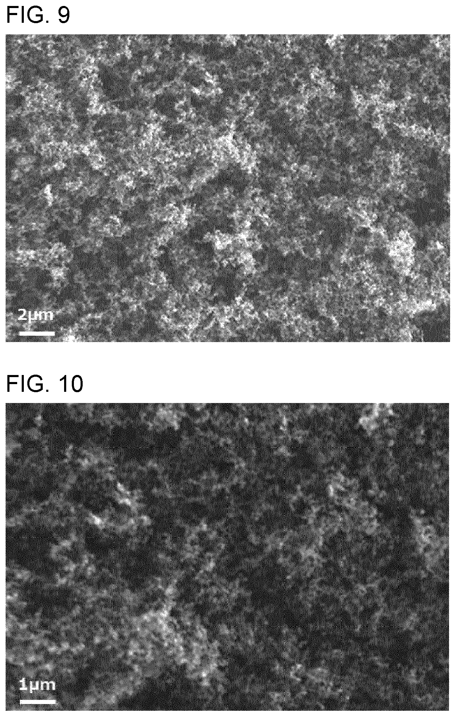

In addition, in common porous carbons used as positive electrode additives, primary particles agglomerate to be continuous such as carbon black and Ketjen black, so that they may be a particle structure with a three-dimensional dendritic structure (Figs. 9 and 10). Such three-dimensional dendritic structures have a low bulk density due to voids between dendritic branches, and short-distance lithium ion diffusion pathways can be formed by being placed between adjacent active materials in the electrode. On the other hand, in an embodiment of the porous carbon of the present invention, it was found by the present inventors that it may be a flaky shape (Figs. 3 and 4). When the porous carbon is the above flaky shape, it is believed that it can form long-distance lithium ion diffusion pathways because it is placed in contact with not only adjacent active materials but also with more distant active materials in the electrode, in addition to a significant decrease in bulk density due to voids formed by wrinkles on the flaky surface. Therefore, it is believed that the use of flaky porous carbon, particularly in combination with three-dimensional dendritic porous carbon, and granular porous carbon (Figs. 7 and 8) can create both short- and long-distance ion diffusion pathways, and thereby better ion diffusion pathways can be ensured throughout the electrode. Therefore, in an embodiment of the porous carbon of the present invention, it was found to be porous carbon suitable for a positive electrode additive that can more improve the input/output characteristics of a non-aqueous electrolyte secondary battery at room temperature, and can ensure the peel strength of an electrode. It was also found that such a flaky shape with wrinkles on the flaky surface can be achieved by applying a production method described below.

<Method for Producing Porous Carbon>

The porous carbon of the present invention is produced, for example, by a method including steps of:

(1) obtaining a mixture comprising a carbon source and a calcium compound;
(2) heat-treating the mixture in an inert gas atmosphere to obtain a carbide; and
(3) removing the calcium compound from the carbide.

The carbon source is not particularly limited, but a saccharide is preferred to enhance homogeneous dispersibility with a calcium compound. Examples of saccharides include monosaccharides such as glucose, galactose, mannose, fructose, ribose, and glucosamine; disaccharides such as sucrose, trehalose, maltose, cellobiose, maltitol, lactobionic acid, and lactosamine; polysaccharides such as starch, glycogen, and pectin. These saccharides may be used alone or in combination of two or more. Among these saccharides, glucose and starch are preferred because porous carbon that improves the input/output characteristics of a non-aqueous electrolyte secondary battery at room temperature is easily produced, and they are readily available in large quantities.

Starches are not particularly limited, and starches derived from corn, cassava, potato, sweet potato, tapioca, beans, wheat, rice, and the like may be used. The amylose content of starch preferred for the present invention is preferably 50% by mass or less, and more preferably 30% by mass or less. The lower the amylose content of starch is, the lower the gelatinization temperature tends to be. Therefore, if the amylose content of starch is the above upper limit or less, since the starch is easily gelatinized at lower temperatures, and compatibility with the calcium compound is easily enhanced, which is preferred. The above amylose content can be determined, for example, by the iodine colorimetric method. The starch may also be a modified starch that has been modified. Modified starches include, for example, etherified starches, esterified starches, cationized starches, cross-linked starches and the like. The starches may be used alone or in combination of two or more.

The calcium compound is not particularly limited, and examples thereof may include calcium chloride, calcium hydroxide, calcium oxide, calcium carbonate, calcium acetate, calcium fluoride, calcium bromide, calcium iodide, calcium carbide, calcium hydrogencarbonate, calcium nitrate, calcium sulfate, calcium silicate, calcium phosphate, calcium pyrophosphate, calcium gluconate, and calcium lactate and the like. Among these calcium compounds, calcium compounds having a melting point of 300°C or less (when the mixture comprises a polyhydric alcohol or carboxylic acid as described below, the melting point of a eutectic compound of the calcium compound and the polyhydric alcohol or carboxylic acid is 300°C or less) are preferred because they facilitate production of porous carbon that improves the input/output characteristics of a non-aqueous electrolyte secondary battery at room temperature, and more preferably at least one selected from the group consisting of calcium chloride hydrate, calcium hydroxide, calcium oxide, calcium carbonate, and calcium acetate. A dihydrate, a tetrahydrate, and a hexahydrate exist as calcium chloride hydrates, but a dihydrate is preferred because of its good reactivity with saccharides.

The mixture comprising the carbon source and the calcium compound may further comprise at least one selected from the group consisting of a polyhydric alcohol and a carboxylic acid. When the mixture comprises a polyhydric alcohol and/or a carboxylic acid, the calcium compound is believed to be dissolved in the polyhydric alcohol and/or the carboxylic acid to form a eutectic compound. The eutectic compound is thought to be formed by the coordination of hydroxyl groups, carboxylates, and carboxylic groups in the polyhydric alcohol and/or the carboxylic acid with calcium. This makes it possible to reduce the melting point of the calcium compound, which alone has a melting point of 300°C or more, to 300°C or less as the melting point of the eutectic compound. Therefore, in the present invention, "the melting point of the calcium compound is 300°C or less" also includes "the melting point of the eutectic compound of the polyhydric alcohol and/or the carboxylic acid with the calcium compound is 300°C or less". Polyhydric alcohols that may be used in the present invention include glycerin, ethylene glycol, propylene glycol, polyethylene glycol, polypropylene glycol and the like. Glycerin and ethylene glycol are preferred among them from the viewpoint of the ease of forming a eutectic with the calcium compound and the ease of availability in large quantities. Carboxylic acids include formic acid, acetic acid, propionic acid, butyric acid, valeric acid, caproic acid, lactic acid, malic acid, citric acid, benzoic acid, phthalic acid, salicylic acid, oxalic acid, malonic acid, succinic acid, glutaric acid, adipic acid, fumaric acid, maleic acid and the like. Formic acid and acetic acid are preferred from the viewpoint of the ease of dissolving the calcium compound, and the ease of availability in large quantities. The mixing ratio of the polyhydric alcohol and the carboxylic acid when one or more polyhydric alcohols and one or more carboxylic acids are used in combination may be changed as appropriate depending on the desired properties of the porous carbon.

The method of mixing the carbon source and the calcium compound, and optionally the polyhydric alcohol and/or the carboxylic acid is not particularly limited and may be mixed by any mixing method.

The amount of the calcium compound to be mixed with the carbon source is preferably 70 parts by mass or more, more preferably 80 parts by mass or more, even more preferably 130 parts by mass or more, still even more preferably 180 parts by mass or more, preferably 500 parts by mass or less, more preferably 400 parts by mass or less, and even more preferably 300 parts by mass or less with respect to 100 parts by mass of the saccharide. When the amount of the calcium compound is within the above range, the pore volume and pore diameter of the resulting porous carbon are likely to be appropriate.

When the mixture comprising the carbon source and the calcium compound further comprises the polyhydric alcohol and/or the carboxylic acid, the amount of the polyhydric alcohol and/or the carboxylic acid is preferably 50 parts by mass or more, more preferably 100 parts by mass or more, even more preferably 150 parts by mass or more, preferably 500 parts by mass or less, more preferably 400 parts by mass or less, and even more preferably 300 parts by mass or less with respect to 100 parts by mass of the saccharide (when one or more polyhydric alcohols and one or more carboxylic acids are used in combination, this refers to the total amount). When the amount of the polyhydric alcohol and/or the carboxylic acid is within the above range, since a eutectic compound with the calcium compound is easily formed, and the eutectic compound becomes easily compatible with the saccharide, the pore volume and pore diameter of the resulting porous carbon tend to be appropriate.

In the production method of the present invention, the mixture comprising the carbon source and the calcium compound is heat-treated in an inert gas atmosphere to obtain a carbide. Inert gases include, for example, nitrogen and argon. The lower the concentration of an oxidized gas in the gas to be used, the more preferred it is. The mixing amount of the oxidized gas, particularly oxygen, is usually 1% by volume or less, and more preferably 0.1% by volume or less. When the oxygen concentration is the above upper limit or less, oxidation of the carbide is easily suppressed, and a structure having the desired features is easily obtained. Oxidative degradation of the generated structure can also be suppressed. The heat treatment temperature is preferably 400°C or more, more preferably 500°C or more, even more preferably 700°C or more, still even more preferably 800°C or more, preferably 1300°C or less, more preferably 1200°C or less, and even more preferably 1000°C or less. When the heat treatment temperature is within the above range, the pore volume of pores with 2 nm or more and 200 nm or less of the resulting porous carbon is likely to be appropriate, and removal of the calcium compound tends to be easier in the subsequent step of removing the calcium compound from the carbide. The above heat treatment may be performed in multiple stages, for example, after evaporating water in the mixture at 50 to 300°C, heat treatment (carbonization) at 400 to 900°C may be performed, and then heat treatment (calcination) may be performed at 900 to 1300°C. Carbides with more homogeneous physical properties can be obtained by performing the heat treatment in multiple stages.

The heat treatment time is not particularly limited, but is, for example, 0.5 hours or more, more preferably 1 hour or more, and even more preferably 3 hours or more, preferably 24 hours or less, more preferably 12 hours or less, and even more preferably 8 hours or less. When the heat treatment time is within the above range, carbonization progresses sufficiently, and ignition is less likely to occur, which is preferred. It is also preferable from the viewpoint of economic efficiency because it is a moderate amount of time.

In the production method of the present invention, the temperature increase rate during the heat treatment step is preferably 2°C/min or more, more preferably 10°C/min or more, and even more preferably 20°C/min or more. When the temperature increase rate is the above lower limit or more, the pore diameter size is likely to be appropriate. The upper limit of the temperature increase rate is not particularly limited, but from the viewpoint of achieving uniform heat treatment, 200°C/min or less is preferred.

As furnaces used for heat treatment, various types of furnaces such as rotary kilns, fluidized bed furnaces, fixed bed furnaces, moving bed furnaces, moving floor furnaces, and the like may be used. Both continuous furnaces, in which raw materials are fed and products are removed continuously, and batch furnaces, in which raw materials are fed and products are removed intermittently may be applied. In the heating means, any means capable of heating to a predetermined temperature is acceptable. Electric heating, gas combustion type heating, highfrequency induction heating, energized heating and the like may be applied. These heating means may be used alone or in combination.

The porous carbon of the present invention can be obtained by removing the calcium compound from the resulting carbide. The removal of the calcium compound is preferably carried out, for example, by acid washing. Acids used for acid washing include hydrochloric acid, sulfuric acid, and nitric acid, but hydrochloric acid is preferred because metal compounds in the carbide are easily dissolved, residual impurities such as sulfur hardly remain, and oxidation of the carbide is easily suppressed. The acid concentration during acid washing may be changed as appropriate depending on the type of acid used. For example, when hydrochloric acid is used, it is preferably in the range of 0.01 to 1.0 mol/L, and more preferably in the range of 0.05 to 0.5 mol/L. The hydrochloric acid concentration within the above range is preferred because it is easier to remove metal compounds, and hydrochloric acid is less likely to remain in the carbide.

The pH of the acid used in acid washing may be changed as appropriate depending on the type, concentration, temperature and the like of the acid used, but preferably it is 3 or less, and more preferably 2.5 or less. If the pH of the acid is the above upper limit or less, it is easier to remove metal compounds efficiently.

Acid washing may be performed, for example, by immersing the resulting carbide in the above acid. When acid washing is performed by immersing the carbide in the acid, the mass ratio of the acid to the carbide may be adjusted as appropriate depending on the type, concentration, temperature of the acid used and the like. The mass of the carbide to be immersed with respect to the mass of the acid is preferably 2% by mass or more, and more preferably 5% by mass or more. The upper limit of the mass ratio is preferably 50% by mass or less, and more preferably 30% by mass or less. When the mass ratio of the carbide to be immersed to the mass of the acid is within the above range, sufficient washing effects are easily obtained.

The acid washing method for the carbide is not particularly limited as long as the carbide can be immersed in the acid, and may be a method in which the carbide is immersed in the acid with the acid being continuously added, retained for a predetermined time, and then withdrawn, or may be a method in which the carbide is immersed in the acid, retained for a predetermined time, and then immersed in the fresh acid after deliquoring, thus repeating such immersing and deliquoring. In addition, it may be a method of updating the entire acid or a method of updating a part of the acid. Furthermore, the acid may be stirred during immersion.

The atmosphere in which acid washing is performed is not particularly limited, and may be appropriately selected depending on the method used for the washing. In the present invention, acid washing is usually carried out in an air atmosphere.

The time for immersing the carbide in the acid can be appropriately adjusted according to the acid used, the treatment temperature and the like, but is preferably 5 minutes or more from the viewpoint of removing metal compounds, preferably 60 minutes or less, more preferably 40 minutes or less, and even more preferably 35 minutes or less from the viewpoint of productivity.

After acid washing of the carbide, the acid in the porous carbon is preferably removed by water washing. The acid and water washings may be repeated until the calcium compound in the porous carbon is removed. The temperature of the solution during acid and water washings is preferably higher from the viewpoint of the removal efficiency of the calcium compound and residual acid, and it is usually performed at 60°C or more.

As an embodiment of the present invention, a mixture comprising a carbon source and a calcium compound may be heat-treated (carbonized) at 500 to 900°C, followed by acid washing, and the porous carbon after acid washing may be heat-treated (calcined) at 900 to 1300°C. Carbonization at 900°C or less makes it easier to remove metal compounds derived from the calcium compound in the acid washing step, and calcination at a higher temperature of 900 to 1300°C makes it easier to obtain the desired pore volume and specific surface area.

The porous carbon after acid washing and water washing may be subjected to drying treatment using a known dryer such as a hot air dryer or a reduced-pressure dryer. Drying is preferably performed at a temperature of 50 to 150°C. If the drying temperature is within the above range, oxidation of the porous carbon is less likely to occur, and drying progresses moderately.

The porous carbon after drying may be pulverized. The pulverization step is a step for controlling the shape, particle diameter, and the like of the finally obtained porous carbon to the desired shape, particle diameter, and the like. The pulverization method is not particularly limited, and known pulverizers such as ball mills, centrifugal roll mills, ring roll mills, centrifugal ball mills, jet mills, cone crushers, double roll crushers, disk crushers, and rotary crushers may be used alone or in combination.

In the present invention, the method for producing porous oxygen may further comprise a classification step after the pulverization step. For example, porous carbon with a narrow particle size distribution width can be obtained by excluding particles having extremely smaller or larger diameter than the desired particle diameter. The classification method is not particularly limited, but may include, for example, classification using a sieve, wet classification, and dry classification. Wet classifiers may include, for example, classifiers that use principles of gravity classification, inertial classification, hydraulic classification, centrifugal classification and the like. Dry classifiers may include classifiers that use principles of sedimentation classification, mechanical classification, centrifugal classification and the like. From the viewpoint of economic efficiency, it is preferable to use a dry classifier. The pulverization and classification steps are preferably performed in an inert gas atmosphere to prevent the surface oxidation during pulverization.

The pulverization and classification may also be performed using a single apparatus. For example, a jet mill equipped with a dry classification function may be used to perform pulverization and classification. Furthermore, an apparatus in which a classifier and a pulverizer are independent of each other may also be used. In this case, pulverization and classification may be performed continuously, or pulverization and classification may be performed discontinuously.

<Additive for Non-Aqueous Electrolyte Secondary Battery Positive Electrode>

The porous carbon of the present invention may preferably be used as an additive for a positive electrode for a non-aqueous electrolyte secondary battery. The porous carbon of the present invention has the above specific pores and low bulk density. Thus, when the porous carbon of the present invention is used as an additive for a positive electrode for a non-aqueous electrolyte secondary battery, it improves the diffusivity of lithium ions into the positive electrode and the adsorption of lithium ions into the pores, facilitates the insertion and desorption of lithium ions into and from the positive electrode active material, and improves the input/output characteristics of the non-aqueous electrolyte secondary battery. Not only that, it suppresses binder adsorption onto additives and aggregation of additives during electrode preparation, thus making it also possible to contribute to improvements in the preparation stability and peel strength of electrodes.

The non-aqueous electrolyte secondary batteries may include, for example, lithium ion secondary batteries, sodium ion secondary batteries, and lithium sulfur batteries. As a preferred embodiment of the present invention, the porous carbon of the present invention may be used as the additive for a positive electrode for a lithium ion secondary battery.

<Composition for Non-aqueous Electrolyte Secondary Battery Positive Electrode>

The present invention also encompasses a composition for a non-aqueous electrolyte secondary battery positive electrode comprising the additive for a non-aqueous electrolyte secondary battery positive electrode described above and positive electrode active material. Furthermore, the present invention also encompasses a composition for a lithium ion secondary battery positive electrode comprising the additive for a lithium ion secondary battery positive electrode described above. The compositions for a non-aqueous electrolyte secondary battery positive electrode of the present invention may optionally comprise other components other than the additive for a non-aqueous electrolyte secondary battery positive electrode and positive electrode active material.

[Positive Electrode Active Material]

The positive electrode active material included in the composition for a non-aqueous electrolyte secondary battery positive electrode is not particularly limited, and known positive electrode active materials may be used. Examples include lithium-containing cobalt oxide ($LiCoO_2$), lithium manganate ($LiMn_2O_4$), lithium-containing nickel oxide ($LiNiO_2$), lithium-containing composite oxide of Co-Ni-Mn, lithium-containing composite oxide of Ni-Mn-Al, lithium-containing composite oxide of Ni-Co-Al, olivine-type lithium iron phosphate ($LiFePO_4$), olivine-type lithium manganese phosphate ($LiMnPO_4$), a lithium excess spinel compound represented by $Li_{1+x}Mn_{2-x}O_4$ (0<X<2), metal oxides such as $Li[Ni_{0.17}Li_{0.2}CO_{0.07}Mn_{07.56}]O_2$, and $LiNi_{0.5}Mn_{1.5}O_4$, sulfur, organic radicals such as a compound and polymer having a nitroxyl radical, a compound and polymer having an oxy radical, a compound and polymer having a nitrogen radical, and a compound and polymer having a fulvalene skeleton.

These may be used alone or in combination of two or more. Among the above, from the viewpoint of improving the battery capacity of the secondary battery, it is preferable to use lithium-containing cobalt oxide ($LiCoO_2$); lithium-containing nickel oxide ($LiNiO_2$); lithium-containing composite oxides of Co-Ni-Mn, such as $LiNi_{1/3}Co_{1/3}Mn_{1/3}O_2$, $LiNi_{0.5}CO_{0.2}Mn_{0.3}O_2$, and $LiNi_{0.8}CO_{0.1}Mn_{0.1}O_2$; lithium-containing composite oxides of Ni-Co-Al, such as $LiNi_{0.8}Co_{0.1}Al_{0.1}O_2$, and $LiNi_{0.8}Co_{0.15}Al_{0.05}O_2$, as the positive electrode active material.

The particle diameter of the positive electrode active material is not particularly limited, and may be the same as that of conventionally used positive electrode active materials. Usually, a positive electrode active material having a diameter in the range of 0.1 to 40 $\mu$m, and more preferably in the range of 0.5 to 20 $\mu$m may be used.

In the composition for a non-aqueous electrolyte secondary battery positive electrode of the present invention, the content of the positive electrode active material is 40 to 97% by mass, and preferably 45 to 95% by mass with respect to the total solid content mass of the composition.

The content of the additive for a non-aqueous electrolyte secondary battery positive electrode is preferably 0.5% by mass or more, more preferably 1% by mass or more, preferably 10% by mass or less, more preferably 8% by mass or less, and even more preferably 6% by mass or less with respect to the total mass of the positive electrode active material. When the content of the additive for a non-aqueous electrolyte secondary battery positive electrode is within the above range, the effect of lowering the electrode resistance is easily exerted sufficiently, the overall mass of the positive electrode active material does not decrease, and also the capacity is hardly reduced.

The mixing ratio of the additive for a non-aqueous electrolyte secondary battery positive electrode and the positive electrode active material may be 1:99 to 10:90 in terms of mass ratio. When the mixing ratio of the additive for a non-aqueous electrolyte secondary battery positive electrode and the positive electrode active material is included in this range, a non-aqueous electrolyte secondary battery with excellent input/output characteristics is easily obtained.

[Solvent]

The composition for a non-aqueous electrolyte secondary battery positive electrode of the present invention may comprise a solvent. As the solvent, for example, an organic solvent may be used, and among them, a polar organic solvent capable of dissolving a binder described later is preferable.

Specifically, acetonitrile, N-methylpyrrolidone (NMP), acetylpyridine, cyclopentanone, N,N-dimethylacetamide, dimethylformamide, dimethylsulfoxide, methylformamide, methyl ethyl ketone, furfural, ethylenediamine and the like may be used as organic solvents. Among them, N-methylpyrrolidone is preferred from the viewpoints of the ease of handling, safety, and the ease of synthesis. These organic solvents may be used alone or in combination of two or more.

The above solvent may be used in an amount such that the solid content concentration in the composition for a non-aqueous electrolyte secondary battery positive electrode is preferably in the range of 1 to 80% by mass, more preferably 5 to 70% by mass, and even more preferably 10 to 60% by mass. By setting the solid content concentration in the above range, the positive electrode active material, the additive for a non-aqueous electrolyte secondary battery positive electrode, and other components comprised therein can be uniformly dispersed, which is preferable.

[Binder]

The composition for a non-aqueous electrolyte secondary battery positive electrode of the present invention preferably comprises a binder for satisfactorily adhering positive electrode active material particles to each other and satisfactorily adhering positive electrode active material to a current collector. For example, polyvinyl alcohol, carboxymethyl cellulose, hydroxypropyl cellulose, diacetyl cellulose, polyvinyl chloride, carboxylated polyvinyl chloride, polyvinyl fluoride, a polymer comprising ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon and the like may be used as examples of the binder, but not limited thereto. These may be used alone or in combination of two or more.

In the composition for a non-aqueous electrolyte secondary battery positive electrode of the present invention, the content of the binder is preferably 0.5 to 10% by mass, and more preferably 1 to 7% by mass with respect to the total mass of the positive electrode in the composition.

[Conductive Material]

The composition for a non-aqueous electrolyte positive electrode of the present invention may further comprise a conductive material in order to further enhance the conductivity of the positive electrode formed on the current collector. Any electronically conductive material that does not cause a chemical change in the constructed non-aqueous electrolyte secondary battery may be used as the conductive material. As specific examples of the conductive material, carbon-based materials such as natural graphite, artificial graphite, carbon black, acetylene black, Ketjen black and carbon fiber; metallic substances such as metal powders or metal fibers, such as copper, nickel, aluminum and silver; and conductive polymers such as polyphenylene derivatives may be used. These conductive materials may be used alone or in combination of two or more.

In the composition for an electrochemical device positive electrode of the present invention, the content of the conductive material is preferably 1 to 10% by mass, and more preferably 1 to 7% by mass with respect to the total mass of the solid content of the positive electrode in the composition.

<Method for Producing Composition for Non-Aqueous Electrolyte Secondary Battery Positive Electrode>

As a method for producing the composition for a non-aqueous electrolyte secondary battery positive electrode of the present invention, the composition can be produced by mixing the above-mentioned additive for a non-aqueous electrolyte secondary battery positive electrode, a positive electrode active material, and if necessary, a solvent and other components. The mixing method is not particularly limited, and for example, a general mixing device such as a disper, mill, or kneader may be used. For example, it is preferable to stir it for 20 minutes or more and 120 minutes or less by using these general mixing devices.

The mixing temperature is also not particularly limited, for example, it may be mixed at a temperature in the range of 0 to 160°C, and preferably in the range of 20 to 80°C. When the mixing temperature is within the above range, the composition easily has a viscosity suitable for coating, and volatilization of organic solvents is less likely to occur, which is preferred.

The mixing atmosphere is not also particularly limited, but it is usually mixed in an air atmosphere.

<Non-Aqueous Electrolyte Secondary Battery>

The composition for a non-aqueous electrolyte secondary battery positive electrode of the present invention may be usefully used in non-aqueous electrolyte secondary batteries. Therefore, the present invention also encompasses a non-aqueous electrolyte secondary battery having a positive electrode prepared using the above composition for a non-aqueous electrolyte secondary battery positive electrode. In the non-aqueous electrolyte secondary battery of the present invention, the diffusivity of electrolyte ions in the positive electrode is improved, and the input/output characteristics of the battery can be improved by comprising the above-mentioned additive for a non-aqueous electrolyte secondary battery positive electrode. The non-aqueous electrolyte secondary batteries of the present invention are preferably those that operate at 2 V to 5 V, and examples thereof include lithium ion secondary batteries or capacitors, and the like. Therefore, the present invention also encompasses a lithium ion secondary battery comprising a positive electrode comprising the composition for a positive electrode for a lithium ion secondary battery of the present invention.

When the non-aqueous electrolyte secondary battery of the present invention is a lithium ion secondary battery, for example, the lithium ion secondary battery comprises a positive electrode, a negative electrode, and an electrolyte.

[Positive Electrode]

The positive electrode is prepared using the composition for a non-aqueous electrolyte secondary battery positive electrode of the present invention, and comprises a current collector and a positive electrode active material layer. The above positive electrode active material layer is formed by applying the composition for a non-aqueous electrolyte secondary battery positive electrode of the present invention to the above current collector.

The method for applying the above composition for a non-aqueous electrolyte secondary battery positive electrode to the current collector is not particularly limited, and publicly known methods can be used. Specifically, for example, a doctor blade method, a dip method, a reverse roll method, a direct roll method, a gravure method, an extrusion method, a brush coating method and the like may be used. In this case, the composition for a non-aqueous electrolyte secondary battery positive electrode may be applied to only one side of the current collector or may be applied to both sides. The thickness of the composition film on the current collector after coating and before drying may be set as appropriate depending on the thickness of the positive electrode active material layer obtained by drying.

A material that has electrical conductivity, and is electrochemically durable is preferably used as the current collector to which the composition for a non-aqueous electrolyte secondary battery positive electrodes is applied. Specifically, a current collector composed of aluminum or an aluminum alloy may be used. In this case, a combination of aluminum and an aluminum alloy may be used, and a combination of alloys of different types may be used. Aluminum and aluminum alloys are excellent current collector materials since they have heat resistance, and are electrochemically stable.

The method for drying the composition for a non-aqueous electrolyte secondary battery positive electrode on the current collector is not particularly limited, and a publicly-known method may be used. Examples thereof include drying by warm air, hot air, low humidity air, vacuum drying, and drying methods by irradiation with infrared rays or electron beams. By drying the composition for an electrochemical element positive electrode on the current collector in this manner, a positive electrode active material layer is formed on the current collector, and a positive electrode comprising the current collector and the positive electrode active material layer can be obtained.

After the drying step, the positive electrode active material layer may be subjected to a pressurization treatment by using a metallic mold press or roll press and the like. The pressurization treatment can improve adhesion between the positive electrode active material layer and the current collector.

[Negative Electrode]

The negative electrode comprises a current collector and a negative electrode active material layer formed on the current collector, and the negative electrode active material layer comprises a negative electrode active material.

The process for producing a negative electrode is a process widely known in the art.

The negative electrode active material comprises a substance capable of reversibly intercalating/deintercalating lithium ions, lithium metal, lithium metal alloy, a substance capable of doping and de-doping lithium, or transition metal oxide.

The substance capable of reversibly intercalating/deintercalating the lithium ions include a crystalline carbon and amorphous carbon. These may be used alone or in combination of two or more. Examples of the crystalline carbon include graphite such as amorphous, sheet-like, scaly, spherical or fibrous natural graphite, or artificial graphite. Examples of the amorphous carbon include soft carbon or hard carbon, mesophase pitch carbides, and calcined coke.

The lithium metal alloy includes an alloy of lithium and a metal selected from the group consisting of Na, K, Mg, Ca, Sr, Si, Sb, In, Zn, Ge, Al, and Sn may be used.

The substance capable of doping and de-doping lithium includes Si, alloys such as and SiMg, $SiO_x$ (0<x<2), Sn, and $SnO_2$.

The content of the negative electrode active material in the negative electrode active material layer is preferably 70 to 100% by mass with respect to the total mass of the negative electrode active material layer, and the negative electrode active material layer may consist only of the negative electrode active material.

The negative electrode active material layer may comprise a binder, and may further selectively comprise a conductive material. The binder content in the negative electrode active material layer is preferably 1 to 5% by mass with respect to the total mass of the negative electrode active material layer. When it further comprises the conductive material, the negative electrode active material may be used in an amount of 80 to 98% by mass, the binder of 1 to 10% by mass, and the conductive material of 1 to 10% by mass.

The binder plays a role of satisfactorily adhering the negative electrode active material particles to each other and satisfactorily adhering the negative electrode active material to the current collector. Water-insoluble binders, water-soluble binders, or combinations thereof may be used as the above binders.

The water-insoluble binder includes, for example, polyvinyl chloride, carboxylated polyvinyl chloride, polyvinyl fluoride, polymers comprising ethylene oxide, polyvinylpyrrolidone, polyurethane, polytetrafluoroethylene, polyvinylidene fluoride, polyethylene, polypropylene, polyamideimide, polyimide or a combination thereof.

The water-soluble binder includes styrene-butadiene rubber, acrylated styrene-butadiene rubber, polyvinyl alcohol, sodium polyacrylate, copolymers of propylene and an olefin having 2 to 8 carbon atoms, copolymers of (meth)acrylic acid and (meth)acrylic acid alkyl esters or combinations thereof.

When a water-soluble binder is used as the negative electrode binder, a cellulose-based compound capable of imparting viscosity to the negative electrode active material layer may further be used as a thickener. The cellulose-based compound includes carboxymethyl cellulose, hydroxypropyl methyl cellulose, methyl cellulose and alkali metal salts thereof, and 0.1 parts by mass to 100 parts by mass of such a thickener may be added with respect to 100 parts by mass of the binder.

The conductive material is used to impart the conductivity to an electrode, and any electronic conductive material that does not cause a chemical change in a constituted battery may be used. As specific examples of the conductive material, carbon-based materials such as natural graphite, artificial graphite, carbon black, acetylene black, Ketjen black and carbon fiber; metallic substances such as metal powders or metal fibers, such as copper, nickel, aluminum and silver, and conductive polymers such as polyphenylene derivatives may be used. These conductive materials may be used alone or in combination of two or more.

As the current collector, those selected from the group consisting of copper foil, nickel foil, stainless steel foil, titanium foil, nickel foam, copper foam, a polymer substrate coated with a conductive metal, and a combination thereof may be used.

The electrolyte preferably comprises a non-aqueous organic solvent and a lithium salt.

The non-aqueous organic solvent acts as a medium through which ions involved in the electrochemical reaction of the battery can move.

As the non-aqueous organic solvent, a carbonate-based, ester-based, ether-based, ketone-based, alcohol-based, or non-protonic solvent may be used. As the carbonate-based solvent, dimethyl carbonate (DMC), diethyl carbonate (DEC), dipropyl carbonate (DPC), methylpropyl carbonate (MPC), ethylpropyl carbonate (EPC), methylethyl carbonate (MEC), ethylmethylcarbonate (EMC), ethylene carbonate (EC), propylene carbonate (PC), butylene carbonate (BC) and the like may be used, and as the ester-based solvent, n-methyl acetate, n-ethyl acetate, n-propyl acetate, dimethylacetate, methylpropionate, ethylpropionate, γ-butyrolactone, decanolide, valerolactone, mevalonolactone, caprolactone and the like may be used. As the ether, dibutyl ether, tetraglyme, diglyme, dimethoxyethane, 2-methyltetrahydrofuran, tetrahydrofuran and the like may be used, and as the ketone-based solvent, cyclohexanone and the like may be used. Further, as the alcohol-based solvent, ethyl alcohol, isopropyl alcohol and the like may be used, and as the non-protonic solvent, nitriles such as R-CN (wherein R is a linear, branched or ring-structured hydrocarbon group having 2 to 20 carbon atoms, which may comprise a double bond, aromatic ring or ether bond), amides such as dimethylformamide, dioxolanes such as 1,3-dioxolane, sulfolans and the like may be used.

The non-aqueous organic solvents may be used alone or in combination of two or more. When two or more of non-aqueous organic solvents are mixed, the mixing ratio may be appropriately adjusted depending on the intended battery performance.

Further, in the case of the carbonate-based solvent, it is preferable to use a mixture of a cyclic carbonate and a chain carbonate. In this case, when the cyclic carbonate and the chain carbonate are mixed and used in a volume ratio of 1:1 to 1:9, the performance of the electrolytic solution is more easily improved.

The lithium salt is dissolved in an organic solvent and acts as a source of lithium ions in the battery to enable the basic operation of a lithium ion secondary battery, and is a substance that plays a role of promoting the movement of lithium ions between a positive electrode and a negative electrode. Typical examples of such lithium salts include, for example, $LiPF_6$, $LiBF_4$, $LiSbF_6$, $LiAsF_6$, $LiCF_3SO_3$, $LiN(SO_2C_2F_5)_2$, $Li(CF_3SO_2)_2N$, $LiC_4F_9SO_3$, $LiClO_4$, $LiAlO_4$, $LiAlCl_4$, $LiN(C_xF_{2x+1}SO_2)(C_yF_{2y+1}SO_2)$ (wherein, x and y are natural numbers), $LiCl$, $LiI$, and $LiB(C_2O_4)_2$ (lithium bisoxalatoborate (LiBOB)). These may be used alone or in combination of two or more. It is preferred that the concentration of the lithium salt used is within the range of 0.1 to 2.0 M. If the concentration of the lithium salt is within the above range, the electrolyte performance is easily maintained since the conductivity of the electrolyte is satisfactory, and the mobility of lithium ions is likely to become satisfactory since the viscosity is suitable.

The electrolyte may further comprise a vinylene carbonate-based or ethylene carbonate-based compound as a life improving agent to improve the battery life.

Representative examples of the ethylene carbonate-based compound include difluoroethylene carbonate, chloroethylene carbonate, dichloroethylene carbonate, bromoethylene carbonate, dibromoethylene carbonate, nitroethylene carbonate, cyanoethylene carbonate, and fluoroethylene carbonate. When such a life improving agent is further used, the amount used may be adjusted as appropriate depending on the type of the compound used.

In the lithium ion secondary battery of the present invention, a separator may be present between a positive electrode and negative electrode. As such a separator, polyethylene, polypropylene, polyvinylidene fluoride, or a multilayer film having two or more layers thereof may be used, and a mixed multilayer film, such as a polyethylene/polypropylene double-layered separator, polyethylene/polypropylene/polyethylene three-layered separator, or polypropylene/polyethylene/polypropylene three-layered separator may be used.

A lithium ion secondary battery is generally formed by making the positive electrode and negative electrode described above face each other (via a separator if necessary) and immersing them into the electrolytic solution.

[Examples]

Hereinafter, the present invention will be more specifically described based on examples and comparative examples, however, the present invention is not limited to the following examples.

<BET Specific Surface Area, Pore Volume and Mode Diameter by Nitrogen Adsorption Method>

[BET Surface Area]

An approximate equation derived from the BET equation is described below.

[Math. 1]

$$p/[v(p_0-p)] = (1/v_mc) + [(c-1)/v_mc](p/p_0)$$

By using the approximate equation, $v_m$ is obtained by substituting the actually measured adsorption amount (v) at a predetermined relative pressure ($p/p_0$) ranging from 0.05 to 0.1 by a multi-point method according to nitrogen adsorption at a liquid nitrogen temperature, and the specific surface area (SSA: the unit is $m^2/g$) of the sample was calculated by the following equation.

[Math. 2]

$$\text{Specific surface area} = \left(\frac{v_m Na}{22400}\right) \times 10^{-18}$$

In the equation, $v_m$ is the adsorption amount (cm3/g) required for forming a monomolecular layer on a sample surface, v is the actually measured adsorption amount (cm3/g), $p_0$ is the saturated vapor pressure, p is the absolute pressure, c is the constant (reflecting the adsorption heat), N is the Avogadro's number $6.022 \times 1023$, and a (nm2) is the area occupied by adsorbate molecules on the sample surface (molecular occupied cross-sectional area).

Specifically, the amount of nitrogen adsorption to a carbon material at the liquid nitrogen temperature was measured by using "Autosorb-iQ-MP" manufactured by Quantachrome Co. as follows. After the carbon material as a measurement sample was filled in a sample tube and the sample tube was cooled to -196°C, the pressure was once reduced, and nitrogen (purity: 99.999%) was then adsorbed to the measurement sample at a desired relative pressure. The adsorbed gas amount v was defined as the amount of nitrogen adsorbed to the sample when the equilibrium pressure was reached at each desired relative pressure.

[Pore Volume]

The adsorption isotherm obtained from the above measurement of the nitrogen adsorption amount was analyzed by the QS-DFT method, and the volume of pores having a pore size (pore diameter) of less than 2 nm was calculated as the micropore volume.

The adsorption isotherm obtained from the measurement of the nitrogen adsorption amount was analyzed by the BJH method, and the volume of pores having a pore size (pore diameter) of 2 nm or more and 200 nm or less was calculated.

The adsorption isotherm obtained from the measurement of the nitrogen adsorption amount was analyzed by the DH method, and the volume of pores having a pore size (pore diameter) of 2 nm or more and 10 nm or less was calculated.

[Mode Diameter]

By the BJH method described above, the logarithmic differential pore volume distribution (dV/d (log D)) was calculated by differentiating the cumulative pore volume (V) with respect to the common logarithm of the pore diameter (D), and the pore diameter with the highest probability of occurrence was used as the mode diameter.

<Bulk Density>

The bulk density was measured using Powder Tester PT-X manufactured by Hosokawa Micron Corporation. Samples were put into an automatic tap density measurement unit, and the bulk density was calculated from the volume after 3000 taps.

<Average Primary Particle Diameter>

The average primary particle diameter was measured by the following method. Samples from Examples 1 to 13 and Comparative Examples 1 to 11, described below, were put into an aqueous solution comprising 5% by mass surfactant ("Toriton X100" sold by Wako Pure Chemical Industries, Ltd.) and treated with an ultrasonic cleaner for at least 10 minutes to disperse them in the solution. The particle size distribution was measured using this dispersion. Particle size distribution measurements were performed using a particle-diameter and particle-size distribution analyzer ("Microtrac MT 3300EXII" manufactured by MicrotracBEL Corp.), and the particle diameter at which the cumulative volume was 50% was considered the average primary particle. Since samples of Comparative Examples 12 and 13 described below could not be measured by the particle size distribution measurement described above, a transmission electron microscope was used to measure the particle diameter of 1000 primary particles as projected on an electron microscope image, and the average value was calculated.

<Contents of Impurity Elements>

The contents of impurity elements were measured by the following method. A carbon sample comprising predetermined amounts of impurity .elements was prepared in advance, and a calibration curve for the relationship between the K$\alpha$ ray intensity and the content of each impurity element was prepared using an X-ray fluorescence spectrometer. Next, the impurity element K$\alpha$ rays in the X-ray fluorescence analysis were measured for the sample, and the impurity element contents were determined from the calibration curve prepared previously. X-ray fluorescence analysis was performed using LAB CENTER XRF-1700 manufactured by SHIMADZU CORPORATION under the following conditions. A holder for the upper irradiation method was used, and the sample measurement area was defined within a circle of 20 mm in diameter. For setting a sample to be measured, 0.5 g of the sample were placed in a polyethylene container with an inner diameter of 25 mm, and measurement was performed with the back of the container pressed by a plankton net, and a measurement surface covered with a polypropylene film. An X-ray source was set to 40 kV and 60 mA for the measurement.

<Particle Shape>

The particle shape was observed by a scanning electron microscopy. It was observed with a 3D real surface view microscope VE-8800 manufactured by KEYENCE CORPORATION at an acceleration voltage of 5 to 20 kV and a measurement magnification of 1000 to 10000 times.

<Preparation of Composition for Lithium Ion Secondary Battery Positive Electrode>

30 parts by mass of N-methylpyrrolidone solution in which 3 parts by mass of polyvinylidene fluoride (KF Polymer 7200 manufactured by KUREHA CORPORATION) were dissolved, 93 parts by mass of LiNi$_{1/3}$Co$_{1/3}$Mn$_{1/3}$O$_2$ (CELSEED C-5H, manufactured by NIPPON CHEMICAL INDUSTRIAL CO., LTD.) as a positive electrode active material, 2 parts by mass of acetylene black ("DENKA BLACK" manufactured by DENKI KAGAKU KOGYO KABUSHIKI KAISHA) as a conductive material, and 2 parts by mass of porous carbon prepared in Examples and Comparison Examples described below were added and mixed. The mixture was stirred and dispersed with a homomixer (4500 rpm) manufactured by PRIMIX Corporation while adding as appropriate N-methylpyrrolidone so that the solid content concentration of the composition became 50% by mass to obtain a composition for a lithium ion secondary battery positive electrode.

<Preparation of Lithium Ion Secondary Battery Positive Electrode>

The above composition for a lithium ion secondary battery positive electrode was applied onto an aluminum foil ("1N30-H", manufactured by Fuji Impex Corp.) as a current collector by using a bar coater ("T101", manufactured by Matsuo Sangyo Co., Ltd.) and dried by a hot air drier (manufactured by Yamato Scientific Co., Ltd.) at 80°C for 30 minutes. After primary drying, rolling treatment was performed by using a roll press (manufactured by Hosen Corp.). Then, after punching as a lithium ion secondary battery positive electrode ($\varphi$ 14 mm), a lithium ion secondary battery positive electrode was prepared by secondary drying under a reduced pressure condition at 120°C for 3 hours. The water content at this time was measured by taking the prepared and dried electrode ($\varphi$ 14 mm), heating it to 250°C by a Karl Fischer (manufactured by Mitsubishi Chemical Analytech Co., Ltd.), and measuring the water content under a nitrogen stream. The water content was controlled to be 20 ppm or less so that the added porous carbon was able to exert the action other than water absorption.

<Preparation of Lithium Ion Secondary Battery>

The above lithium ion secondary battery positive electrode was transferred to a glove box (manufactured by Miwa Manufacturing Co., Ltd.) in an argon gas atmosphere. For a negative electrode, a laminate comprising a metal lithium foil (thickness 0.2 mm, $\varphi$ 16 mm) as a negative electrode active material layer and a stainless steel foil (thickness 0.2 mm, $\varphi$ 17 mm) as a current collector was used.

In addition, a polypropylene-based (cell Guard #2400, manufactured by Polypore Co., Ltd.) separator was used, and as an electrolyte, a mixed solvent system of lithium hexafluorophosphate (LiPF$_6$) in which ethylene carbonate (EC) and ethylmethyl carbonate (EMC) were added with vinylene carbonate (VC) (1M-LiPF$_6$. EC/EMC = 3/7% by volume, VC 2% by mass) was used and injected to prepare a cointype lithium ion secondary battery (2032 type).

(Example 1)

One gram of starch (derived from corn, amylose content about 26%, sold by FUJIFILM Wako Pure Chemical Corporation) was mixed with 2 g (200 parts by mass with respect to 100 parts by mass of starch) of calcium chloride dihydrate (sold by FUJIFILM Wako Pure Chemical Corporation), and the resulting mixture was heated to 700°C in a nitrogen gas atmosphere. In this case, the temperature increase rate to 700°C was 10°C/min. Carbide was then obtained by heat-treating it at 700°C for 60 minutes under a nitrogen gas stream. Then, after being washed with 0.1 mol/L hydrochloric acid at 80°C for 30 minutes, the carbide was removed onto a Büchner funnel and washed with water until the pH of the filtrate was in the range of 6 to 8. Acid washing and water washing were repeated three times, followed by hot air drying at 80°C to obtain porous carbon. The resulting porous carbon was further heat-treated (calcined) at 900°C for 60 minutes.

(Example 2)

Treatment was performed in the same manner as in Example 1, except that the temperature increase rate under a nitrogen gas stream was 5°C/min to obtain porous carbon.

(Example 3)

Treatment was performed in the same manner as in Example 1, except that the temperature increase rate under a nitrogen gas stream was 20°C/min to obtain porous carbon.

(Example 4)

Treatment was performed in the same manner as in Example 1, except that the additive amount of calcium chloride dihydrate was 150 parts by mass with respect to 100 parts by mass of starch to obtain porous carbon.

(Example 5)

Treatment was performed in the same manner as in Example 1, except that the additive amount of calcium chloride dihydrate was 300 parts by mass with respect to 100 parts by mass of starch to obtain porous carbon.

(Example 6)

Treatment was performed in the same manner as in Example 1, except that the resulting porous carbon was not further heat-treated (calcined) at 900°C for 60 minutes to obtain porous carbon.

(Example 7)

Treatment was performed in the same manner as in Example 1, except that the resulting porous carbon was heat-treated (calcined) at 1200°C for 60 minutes instead of being further heat-treated (calcined) at 900°C for 60 minutes to obtain porous carbon.

(Example 8)

One gram of glucose (sold by FUJIFILM Wako Pure Chemical Corporation) was mixed with 1.1 g (110 parts by mass with respect to 100 parts by mass of glucose) of calcium chloride dihydrate (sold by FUJIFILM Wako Pure Chemical Corporation), and the resulting mixture was heated to 700°C in a nitrogen gas atmosphere. In this case, the temperature increase rate to 700°C was 10°C/min. Carbide was then obtained by heat-treating it at 700°C for 60 minutes under a nitrogen gas stream. Then, after being washed with 0.1 mol/L hydrochloric acid at 80°C for 30 minutes, the carbide was removed onto a Büchner funnel and washed with water until the pH of the filtrate was in the range of 6 to 8. Acid washing and water washing were repeated three times, followed by hot air drying at 80°C to obtain porous carbon. The resulting porous carbon was further heat-treated (calcined) at 900°C for 60 minutes.

(Example 9)

Treatment was performed in the same manner as in Example 8, except that the additive amount of calcium chloride dihydrate was 150 parts by mass with respect to 100 parts by mass of glucose to obtain porous carbon.

(Example 10)

Treatment was performed in the same manner as in Example 8, except that the additive amount of calcium chloride dihydrate was 200 parts by mass with respect to 100 parts by mass of glucose to obtain porous carbon.

(Example 11)

Treatment was performed in the same manner as in Example 8, except that the additive amount of calcium chloride dihydrate was 300 parts by mass with respect to 100 parts by mass of glucose to obtain porous carbon.

(Example 12)

One gram of starch was mixed with 0.75 g (75 parts by mass with respect to 100 parts by mass of starch) of calcium hydroxide (sold by FUJIFILM Wako Pure Chemical Corporation) and 1.85 g (185 parts by mass with respect to 100 parts by mass of starch) of glycerin (sold by FUJIFILM Wako Pure Chemical Corporation), and the resulting mixture was heated to 700°C in a nitrogen gas atmosphere. In this case, the temperature increase rate to 700°C was 10°C/min. Carbide was then obtained by heat-treating it at 700°C for 60 minutes under a nitrogen gas stream. Then, after being washed with 0.1 mol/L hydrochloric acid at 80°C for 30 minutes, the carbide was removed onto a Büchner funnel and washed with water until the pH of the filtrate was in the range of 6 to 8. Acid washing and water washing were repeated three times, followed by hot air drying at 80°C to obtain porous carbon. The resulting porous carbon was further heat-treated (calcined) at 900°C for 60 minutes.

(Example 13)

Treatment was performed in the same manner as in Example 12, except that the additive amount of calcium hydroxide was 150 parts by mass with respect to 100 parts by mass of starch to obtain porous carbon.

(Comparative Example 1)

Treatment was performed in the same manner as in Example 1, except that magnesium chloride dihydrate (sold by FUJIFILM Wako Pure Chemical Corporation) was used in place of calcium chloride dihydrate to obtain porous carbon.

(Comparative Example 2)

Treatment was performed in the same manner as in Example 1, except that calcium chloride anhydride (sold by FUJIFILM Wako Pure Chemical Corporation) was used in place of calcium chloride dihydrate to obtain porous carbon.

(Comparative Example 3)

Treatment was performed in the same manner as in Example 1, except that polyvinyl alcohol (PVA) (sold by FUJIFILM Wako Pure Chemical Corporation) was used in place of starch to obtain porous carbon.

(Comparative Example 4)

Treatment was performed in the same manner as in Example 1, except that, in place of calcium chloride dihydrate, calcium hydroxide (sold by FUJIFILM Wako Pure Chemical Corporation) was used in an amount of 75 parts by mass with respect to 100 parts by mass of starch to obtain porous carbon.

(Comparative Example 5)

Treatment was performed in the same manner as in Comparative Example 4, except that the additive amount of calcium hydroxide was 150 parts by mass with respect to 100 parts by mass of starch to obtain porous carbon.

(Comparative Example 6)

Treatment was performed in the same manner as in Comparative Example 4, except that the additive amount of calcium hydroxide was 200 parts by mass with respect to 100 parts by mass of starch to obtain porous carbon.

(Comparative Example 7)

Treatment was performed in the same manner as in Comparative Example 6, except that zinc chloride (sold by FUJIFILM Wako Pure Chemical Corporation) was used in place of calcium hydroxide to obtain porous carbon.

(Comparative Example 8)

One gram of polyvinyl alcohol (PVA) was mixed with 4 g (400 parts by mass with respect to 100 parts by mass of PVA) of magnesium citrate (sold by FUJIFILM Wako Pure Chemical Corporation), and the resulting mixture was heated to 700°C in a nitrogen gas atmosphere. In this case, the temperature increase rate to 700°C was 10°C/min. Carbide was then obtained by heat-treating it at 700°C for 60 minutes under a nitrogen gas stream. After being washed with 1 mol/L hydrochloric acid at 80°C for 30 minutes, the carbide was removed onto a Büchner funnel and washed with water until the pH of the filtrate was in the range of 6 to 8. Acid washing and water washing were repeated three times, followed by hot air drying at 80°C to obtain porous carbon. The resulting porous carbon was further heat-treated (calcined) at 900°C for 60 minutes.

(Comparative Example 9)

One gram of polyvinyl alcohol (PVA) was mixed with 1 g (100 parts by mass with respect to 100 parts by mass of PVA) of magnesium oxide particles having an average particle diameter of 10 nm, and the resulting mixture was heated to 700°C in a nitrogen gas atmosphere. In this case, the temperature increase rate to 700°C was 10°C/min. Carbide was then obtained by heat-treating it at 700°C for 60 minutes under a nitrogen gas stream. Then, after being washed with 1 mol/L hydrochloric acid at 80°C for 30 minutes, the carbide was removed onto a Büchner funnel and washed with water until the pH of the filtrate was in the range of 6 to 8. Acid washing and water washing were repeated three times, followed by hot air drying at 80°C to obtain porous carbon. The resulting porous carbon was further heat-treated (calcined) at 900°C for 60 minutes.

(Comparative Example 10)

Treatment was performed in the same manner as in Comparative Example 9, except that magnesium oxide particles having an average particle diameter of 30 nm were used in place of magnesium oxide particles having an average particle diameter of 10 nm to obtain porous carbon.

(Comparative Example 11)

Treatment was performed in the same manner as in Comparative Example 9, except that magnesium oxide particles having an average particle diameter of 150 nm were used in place of magnesium oxide particles having an average particle diameter of 10 nm to obtain porous carbon.

(Comparative Example 12)

Ketjen black (EC600JD manufactured by Lion Specialty Chemicals Co., Ltd.) was used as porous carbon.

(Comparative Example 13)

Carbon black (SuperP-Li manufactured by Imerys Graphite & Carbon Corporation) was used as porous carbon.
The production conditions for the porous carbons obtained in the examples and comparative examples are shown in Table 1, and the physical properties are shown in Table 2.

[Table 1]

| Carbon source | Metal salt | | Polyhydric alcohol or carboxylic acid | | Carbonization temperature [°C] | Temperature increase rate [°C/min] | Calcination temperature [°C] |
|---|---|---|---|---|---|---|---|
| | Type | Additive amount [parts by mass with respect to 100 parts by mass of carbon source] | Type | Additive amount [parts by mass with respect to 100 parts by mass of carbon source] | | | |
| Starch | $CaCl_2 \cdot 2H_2O$ | 200 | - | - | 700 | 10 | 900 |
| Starch | $CaCl_2 \cdot 2H_2O$ | 200 | - | - | 700 | 5 | 900 |
| Starch | $CaCl_2 \cdot 2H_2O$ | 200 | - | - | 700 | 20 | 900 |
| Starch | $CaCl_2 \cdot 2H_2O$ | 150 | - | - | 700 | 10 | 900 |
| Starch | $CaCl_2 \cdot 2H_2O$ | 300 | - | - | 700 | 10 | 900 |
| Starch | $CaCl_2 \cdot 2H_2O$ | 200 | - | - | 700 | 10 | - |
| Starch | $CaCl_2 \cdot 2H_2O$ | 200 | - | - | 700 | 10 | 1200 |
| Glucose | $CaCl_2 \cdot 2H_2O$ | 110 | - | - | 700 | 10 | 900 |
| Glucose | $CaCl_2 \cdot 2H_2O$ | 150 | - | - | 700 | 10 | 900 |
| Glucose | $CaCl_2 \cdot 2H_2O$ | 200 | - | - | 700 | 10 | 900 |
| Glucose | $CaCl_2 \cdot 2H_2O$ | 300 | - | - | 700 | 10 | 900 |
| Starch | $Ca(OH)_2$ | 75 | Glycerin | 185 | 700 | 10 | 900 |
| Starch | $Ca(OH)_2$ | 150 | Glycerin | 185 | 700 | 10 | 900 |
| Starch | $MgCl_2 \cdot 2H_2O$ | 200 | - | - | 700 | 10 | 900 |
| Starch | $CaCl_2$ | 200 | - | - | 700 | 10 | 900 |
| PVA | $CaCl_2 \cdot 2H_2O$ | 200 | - | - | 700 | 10 | 900 |
| Starch | $Ca(OH)_2$ | 75 | - | - | 700 | 10 | 900 |
| Starch | $Ca(OH)_2$ | 150 | - | - | 700 | 10 | 900 |
| Starch | $Ca(OH)_2$ | 200 | - | - | 700 | 10 | 900 |
| Starch | Zinc chloride | 200 | - | - | 700 | 10 | 900 |
| PVA | Magnesium citrate | 400 | - | - | 700 | 10 | 900 |
| PVA | MgO particles (average particle diameter 10nm) | 100 | - | - | 700 | 10 | 900 |

(continued)

| Carbon source | Metal salt | | Polyhydric alcohol or carboxylic acid | | Carbonization temperature [°C] | Temperature increase rate [°C/min] | Calcination temperature [°C] |
|---|---|---|---|---|---|---|---|
| | Type | Additive amount [parts by mass with respect to 100 parts by mass of carbon source] | Type | Additive amount [parts by mass with respect to 100 parts by mass of carbon source] | | | |
| PVA | MgO particles (average particle diameter 30nm) | 100 | - | - | 700 | 10 | 900 |
| PVA | MgO particles (average particle diameter 150nm) | 100 | - | - | 700 | 10 | 900 |
| Ketjen black | - | - | - | - | - | - | - |
| Carbon black | - | - | - | - | - | - | - |

[Table 2]

| | | Pore volume of pores with 2 to 200 nm [cm³/g] | Bulk density [g/cm³] | Mode diameter [nm] | Average primary particle diameter [μm] | Pore volume of pores with less than 2nm [cm³/g] | Specific surfasce area [m²/g] | Pore volume of pores with 2 to 10 nm (DH method) [cm³/g] | Impurity [ppm] | | | Particle shape |
| | | | | | | | | | Calcium | Sulfur | Silicon | |
|---|---|---|---|---|---|---|---|---|---|---|---|---|
| Example | 1 | 1.59 | 0.012 | 21 | 24 | 0.12 | 727 | 0.28 | 653 | 23 | 116 | Flaky |
| | 2 | 1.83 | 0.011 | 51 | 26 | 0.13 | 612 | 0.11 | 650 | 25 | 117 | Flaky |
| | 3 | 1.28 | 0.014 | 14 | 23 | 0.10 | 635 | 0.29 | 668 | 26 | 120 | Flaky |
| | 4 | 0.99 | 0.015 | 14 | 27 | 0.10 | 584 | 0.22 | 625 | 28 | 111 | Flaky |
| | 5 | 2.20 | 0.008 | 147 | 28 | 0.14 | 675 | 0.19 | 715 | 27 | 121 | Flaky |
| | 6 | 1.58 | 0.010 | 21 | 26 | 0.11 | 679 | 0.27 | 645 | 26 | 116 | Flaky |
| | 7 | 1.62 | 0.017 | 21 | 28 | 0.13 | 756 | 0.28 | 678 | 29 | 125 | Flaky |
| | 8 | 0.81 | 0.013 | 9 | 25 | 0.10 | 666 | 0.50 | 594 | 25 | 115 | Flaky |
| | 9 | 1.67 | 0.009 | 14 | 28 | 0.09 | 844 | 0.48 | 615 | 27 | 117 | Flaky |
| | 10 | 3.18 | 0.005 | 18 | 23 | 0.06 | 1006 | 0.32 | 658 | 26 | 118 | Flaky |
| | 11 | 3.65 | 0.004 | 59 | 26 | 0.05 | 1103 | 0.25 | 702 | 28 | 121 | Flaky |
| | 12 | 1.65 | 0.068 | 28 | 26 | 0.20 | 753 | 0.29 | 751 | 28 | 120 | Granular |
| | 13 | 1.26 | 0.074 | 33 | 24 | 0.22 | 798 | 0.36 | 758 | 27 | 118 | Granular |

(continued)

| | | Pore volume of pores with 2 to 200 nm [cm³/g] | Bulk density [g/cm³] | Mode diameter [nm] | Average primary particle diameter [μm] | Pore volume of pores with less than 2nm [cm³/g] | Specific surfasce area [m²/g] | Pore volume of pores with 2 to 10 nm (DH method) [cm³/g] | Impurity [ppm] | | | Particle shape |
|---|---|---|---|---|---|---|---|---|---|---|---|---|
| | | | | | | | | | Calcium | Sulfur | Silicon | |
| Comp. Example | 1 | 0.19 | 0.355 | 195 | 26 | 0.12 | 348 | 0.01 | 328 | 28 | 116 | Granular |
| | 2 | 0.09 | 0.421 | 2 | 25 | 0.11 | 273 | 0.03 | 689 | 27 | 120 | Granular |
| | 3 | 0.22 | 0.401 | 195 | 26 | 0.00 | 75 | 0.02 | 712 | 15 | 118 | Granular |
| | 4 | 0.54 | 0.080 | 147 | 28 | 0.14 | 364 | 0.06 | 685 | 30 | 131 | Granular |
| | 5 | 0.91 | 0.045 | 195 | 27 | 0.23 | 756 | 0.34 | 629 | 28 | 128 | Granular |
| | 6 | 1.19 | 0.050 | 195 | 28 | 0.15 | 587 | 0.28 | 682 | 27 | 117 | Granular |
| | 7 | 1.61 | 0.212 | 3 | 28 | 0.56 | 1773 | 0.92 | 316 | 33 | 111 | Granular |
| | 8 | 1.91 | 0.170 | 4 | 57 | 0.13 | 1503 | 1.41 | 53 | 11700 | 162 | Granular |
| | 9 | 2.22 | 0.102 | 11 | 5 | 0.18 | 1096 | 0.91 | 119 | 15700 | 307 | Granular |
| | 10 | 2.56 | 0.106 | 28 | 5 | 0.05 | 798 | 0.48 | 92 | 22100 | 357 | Granular |
| | 11 | 1.21 | 0.103 | 195 | 4 | 0.07 | 334 | 0.13 | 225 | 22000 | 318 | Granular |
| | 12 | 3.88 | 0.055 | 147 | 0.034 | 0.15 | 1376 | 0.94 | 63 | 159 | 192 | Three-dimensional dendritic |
| | 13 | 0.29 | 0.056 | 171 | 0.04 | 0.01 | 59 | 0.00 | 51 | 169 | 169 | Three-dimensional dendritic |

<Measurment of Charge/Discharge Capacity, Initial Charge/Discharge Efficienty, and DC Resistance of Lithium Ion Secondary Battery>

Using the porous carbons obtained in Examples 1 through 13 and Comparative Examples 1 through 13, lithium ion secondary batteries were prepared according to the above description. The resulting lithium ion secondary batteries were placed in a thermostatic chamber at 25°C, and charge-discharge tests were conducted using a charge-discharge tester ("TOSCAT", manufactured by TOYO SYSTEM CO., LTD.) after measuring the DC resistance value before the initial charge. As for the DC resistance, the resistance value when a 0.7 mA current was applied for 3 seconds was measured. Charge capacity was measured by performing constant-current charging at 0.2C to 4.2 V relative to the lithium potential. Discharge capacity was measured by performing constant-current discharging at 0.2 C to 3 V relative to the lithium potential. Initial charge/discharge efficiency (%) was calculated by the formula: (Discharge capacity)/(Charge capacity) $\times$ 100.

<Measurement of Charge Capacity Retention Rate of Lithium Secondary Battery>

Using the porous carbons obtained in Examples 1 through 13 and Comparative Examples 1 through 13, lithium ion secondary batteries were prepared according to the above description. The resulting lithium ion secondary batteries were placed in a thermostatic chamber at 25°C, and the charge capacity retention rate was measured using a charge-discharge tester ("TOSCAT", manufactured by TOYO SYSTEM CO., LTD.). In charging, constant-current charging was performed at 0.2C to 4.2 V relative to the lithium potential, and in discharging, constant-current discharging was performed at 0.2 C to 3 V relative to the lithium potential. After three cycles of initial charge/discharge were performed under the conditions described above, the charge rate was changed to 2C, and one cycle of charge/discharge was performed. The ratio of the charge capacity at 2C to the charge capacity at 0.2C was defined as a charge capacity retention rate.

<Measurement of Discharge Capacity Retention Rate of Lithium Secondary Battery>

Using the porous carbons obtained in Examples 1 through 13 and Comparative Examples 1 through 13, lithium ion secondary batteries were prepared according to the above description. The resulting lithium ion secondary batteries were placed in a thermostatic chamber at 25°C, and the discharge capacity retention rate was measured using a charge-discharge tester ("TOSCAT", manufactured by TOYO SYSTEM CO., LTD.). In charging, constant-current charging was performed at 0.2C to 4.2 V relative to the lithium potential, and in discharging, constant-current discharging was performed at 0.2C to 3 V relative to the lithium potential. After three cycles of initial charge/discharge were performed under the conditions described above, the discharge rate was changed to 2C, and one cycle of charge/discharge was performed. The ratio of the discharge capacity at 2C to the discharge capacity at 0.2C was defined as a discharge capacity retention rate. In general, it is known that when the input/output characteristics of a battery are poor, the insertion and desorption of lithium ions into and from the electrode tend to proceed less smoothly as the rate during charging and discharging increases. Therefore, a large ratio of the charge/discharge capacity at a high rate to the charge/discharge capacity at a low rate (charge/discharge capacity retention rate) indicates that the battery has excellent input/output characteristics.

<Evaluation of Peel Strength of Lithium Ion Secondary Battery Positive Electrode and Number of Occurrences of Chipping>

For positive electrodes for lithium secondary batteries prepared by the method described above from the porous carbons obtained in Examples 1 through 13 and Comparative Examples 1 through 13, the strength when a slurry-coated surface was peeled off from an aluminum foil that served as the current collector. Specifically, the slurry-coated surface of the resulting electrode for a lithium secondary battery and a stainless steel plate were stuck together with a double-sided tape (a double-sided tape manufactured by NICHIBAN Co., Ltd.), and 180° peel strength (peel width 10 mm, peel speed 100 mm/min) was measured using a 50 N load cell (manufactured by IMADA CO., LTD.). The number of occurrences of chipping of the electrode was calculated by punching out 10 sheets of positive electrode for lithium-ion batteries using a φ14 mm punching machine, and counting the number of electrodes in which the active material was peeled off from the current collector was counted.

The test results for the charge/discharge capacity, initial charge/discharge efficiency, DC resistance, charge capacity retention rate, discharge capacity retention rate, peel strength, and the number of occurrences of chipping of the electrodes are shown in Table 3.

[Table 3]

| | | Charge capacity [mAh/g] | Discharge capacity [mAh/g] | Initial charge/ discharge efficiency [%] | DC resistance [Ω] | Charge capacity retention rate (2C/ 0.2C) [%] | Discharge capacity retention rate (2C/ 0.2C) [%] | Peel strength [N/m] | Number of occurrences of chipping of electrode [number] |
|---|---|---|---|---|---|---|---|---|---|
| Example | 1 | 165 | 144 | 87 | 205 | 70 | 60 | 81 | 0 |
| | 2 | 165 | 144 | 87 | 269 | 72 | 57 | 81 | 0 |
| | 3 | 165 | 143 | 87 | 188 | 72 | 62 | 82 | 0 |
| | 4 | 166 | 145 | 87 | 227 | 67 | 54 | 86 | 0 |
| | 5 | 165 | 143 | 87 | 258 | 67 | 56 | 82 | 0 |
| | 6 | 165 | 143 | 87 | 216 | 63 | 55 | 85 | 0 |
| | 7 | 165 | 144 | 87 | 254 | 69 | 60 | 85 | 0 |
| | 8 | 165 | 144 | 87 | 212 | 66 | 56 | 84 | 0 |
| | 9 | 166 | 145 | 87 | 215 | 68 | 57 | 82 | 0 |
| | 10 | 165 | 144 | 87 | 203 | 75 | 66 | 80 | 0 |
| | 11 | 165 | 144 | 87 | 208 | 74 | 64 | 80 | 0 |
| | 12 | 166 | 144 | 87 | 173 | 56 | 48 | 84 | 0 |
| | 13 | 165 | 144 | 87 | 160 | 56 | 50 | 88 | 0 |

(continued)

| | | Charge capacity [mAh/g] | Discharge capacity [mAh/g] | Initial charge/ discharge efficiency [%] | DC resistance [$\Omega$] | Charge capacity retention rate (2C/ 0.2C) [%] | Discharge capacity retention rate (2C/ 0.2C) [%] | Peel strength [N/m] | Number of occurrences of chipping of electrode [number] |
|---|---|---|---|---|---|---|---|---|---|
| Comp. Example | 1 | 165 | 144 | 87 | 657 | 25 | 37 | 74 | 1 |
| | 2 | 165 | 143 | 87 | 612 | 10 | 34 | 70 | 1 |
| | 3 | 164 | 143 | 87 | 630 | 6 | 31 | 64 | 2 |
| | 4 | 165 | 144 | 87 | 175 | 45 | 35 | 85 | 0 |
| | 5 | 165 | 144 | 87 | 177 | 50 | 46 | 72 | 1 |
| | 6 | 164 | 143 | 87 | 179 | 55 | 50 | 68 | 2 |
| | 7 | 166 | 144 | 87 | 202 | 25 | 54 | 100 | 0 |
| | 8 | 166 | 142 | 85 | 266 | 36 | 48 | 82 | 0 |
| | 9 | 166 | 143 | 86 | 208 | 50 | 59 | 34 | 6 |
| | 10 | 166 | 144 | 87 | 235 | 48 | 51 | 39 | 5 |
| | 11 | 165 | 144 | 87 | 297 | 47 | 48 | 57 | 3 |
| | 12 | 162 | 140 | as | 266 | 63 | 55 | 50 | 4 |
| | 13 | 163 | 143 | 87 | 421 | 16 | 41 | 75 | 1 |

Since the porous carbons of Example 1 to 13 have a high charge/discharge capacity retention rate and a peel strenght, and no chipping of the electrode occured, it is seen that they are porous carbons suitable for positive electrode addictives that can improve the input/output characteristics of non-aqueous electrolyte secondary batteries at room temperature, and ensure the peel strength of the electrodes. On the other hand, in the porous carbons of Comparative Examples 1 to 13, at least one of the charge capacity retention rate, discharge capacity retention rate, peel strength, and number of occurrences of chipping of the electrode was not sufficient.

**Claims**

1. Porous carbon having a pore volume of pores with 2 nm or more and 200 nm or less of 0.8 $cm^3$/g or more as measured by the BJH method, a bulk density of 0.10 $g/cm^3$ or less, a mode pore diameter of 150 nm or less as measured by the BJH method, and an average primary particle diameter of 1 um or more and 100 $\mu$m or less.

2. The porous carbon according to claim 1, having a pore volume of pores with less than 2 nm of 0.35 $cm^3$/g or less as measured by the DFT method.

3. The porous carbon according to claim 1 or 2, having a specific surface area of 500 $m^2$/g or more and 1200 $m^2$/g or less as measured by the BET method.

4. The porous carbon according to any one of claims 1 to 3, wherein the calcium content is 20 ppm or more and 2000 ppm or less.

5. The porous carbon according to any one of claims 1 to 4, wherein the sulfur content is 1000 ppm or less, and the silicon content is 1000 ppm or less.

6. The porous carbon according to any one of claims 1 to 5, having a bulk density of 0.05 $g/cm^3$ or less.

7. A method for producing the porous carbon according to any one of claims 1 to 6, comprising:

    (1) a step of obtaining a mixture comprising a carbon source and a calcium compound;
    (2) a step of heat-treating the mixture in an inert gas atmosphere to obtain a carbide; and
    (3) a step of removing the calcium compound from the carbide.

8. The method according to claim 7, wherein the mixture in the step (1) further comprises at least one selected from the group consisting of a polyhydric alcohol and a carboxylic acid.

9. The method according to claim 7 or 8, wherein the calcium compound has a melting point of 300°C or less.

10. The method according to any one of claims 7 to 9, wherein the calcium compound is at least one selected from the group consisting of a calcium chloride hydrate, calcium hydroxide, calcium oxide, calcium carbonate and calcium acetate.

11. The method according to any one of claims 7 to 10, wherein the carbon source is a saccharide.

12. The method according to claim 11, wherein the saccharide is at least one selected from the group consisting of a monosaccharide, a disaccharide and a polysaccharide.

13. The method according to any one of claims 7 to 12, wherein the removal of the calcium compound in the step (3) is performed by acid washing.

14. The method according to any one of claims 7 to 13, wherein the temperature of the heat treatment step in the step (2) is 400°C or more and 1300°C or less.

15. The method according to any one of claims 7 to 14, wherein the temperature increase rate of the heat treatment step in the step (2) is 2°C/min or more.

16. The porous carbon according to any one of claims 1 to 6, which is a positive electrode additive for a non-aqueous electrolyte secondary battery.

17. The porous carbon according to any one of claims 1 to 6, which is a positive electrode additive for a lithium ion secondary battery.

18. A composition for a non-aqueous electrolyte secondary battery positive electrode comprising the porous carbon according to any one of claims 1 to 6.

19. A composition for a lithium ion secondary battery positive electrode comprising the porous carbon according to any one of claims 1 to 6.

20. A non-aqueous electrolyte secondary battery comprising a positive electrode comprising the composition for a non-aqueous electrolyte secondary battery positive electrode according to claim 18.

21. A lithium ion secondary battery comprising a positive electrode comprising the composition for a lithium ion secondary battery positive electrode according to claim 19.

FIG. 1

FIG. 2

FIG. 3

FIG. 4

FIG. 5

FIG. 6

FIG. 7

10μm

FIG. 8

2μm

FIG. 9

FIG. 10

## INTERNATIONAL SEARCH REPORT

| | International application No. |
|---|---|
| | **PCT/JP2022/022127** |

**A. CLASSIFICATION OF SUBJECT MATTER**

*H01M 4/62*(2006.01)i; *C01B 32/05*(2017.01)i; *H01G 11/42*(2013.01)i; *H01G 11/44*(2013.01)i; *H01G 11/86*(2013.01)i; *H01M 4/13*(2010.01)i
FI:  H01M4/62 Z; H01M4/13; C01B32/05; H01G11/42; H01G11/86; H01G11/44

According to International Patent Classification (IPC) or to both national classification and IPC

**B. FIELDS SEARCHED**

Minimum documentation searched (classification system followed by classification symbols)
H01M4/62; C01B32/05; H01G11/42; H01G11/44; H01G11/86; H01M4/13

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2009/063966 A1 (ASAHI KASEI KABUSHIKI KAISHA) 22 May 2009 (2009-05-22) | 1-21 |
| A | JP 2017-50184 A (MITSUBISHI CHEM CORP) 09 March 2017 (2017-03-09) | 1-21 |
| A | JP 2014-131080 A (ASAHI KASEI KABUSHIKI KAISHA) 10 July 2014 (2014-07-10) | 1-21 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 August 2022** | **16 August 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/022127**

| Patent document cited in search report | | | Publication date (day/month/year) | Patent family member(s) | | | Publication date (day/month/year) |
|---|---|---|---|---|---|---|---|
| WO | 2009/063966 | A1 | 22 May 2009 | US | 2010/0255377 | A1 | |
| | | | | EP | 2214236 | A1 | |
| | | | | CN | 101855757 | A | |
| | | | | KR | 10-2010-0040327 | A | |
| JP | 2017-50184 | A | 09 March 2017 | US | 2018/0013146 | A1 | |
| | | | | WO | 2016/113952 | A1 | |
| | | | | EP | 3246974 | A1 | |
| | | | | CN | 107112536 | A | |
| | | | | KR | 10-2017-0103003 | A | |
| JP | 2014-131080 | A | 10 July 2014 | (Family: none) | | | |

Form PCT/ISA/210 (patent family annex) (January 2015)

**EP 4 354 550 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021092329 A
- JP 4964404 B
- JP 4727386 B